# EUROPEAN PATENT APPLICATION

(11) **EP 4 844 545 A1**
(43) Date of publication of application: **25.11.2026**
(21) Application number: 26177862.5
(22) Date of filing: 11.05.2026
(51) Int. Cl.: G06F 3/0354, G06F 3/041, G06F 3/046, G06F 3/0346

(54) **TILT DETECTION USING INTEGRATED DISTANCE SENSOR**

(30) Priority: 22.05.2025 US 202519215944
(71) Applicant: Microsoft Technology Licensing, LLC, Redmond, WA 98052 (US)
(72) Inventor: MENASHOF, Roei Shlomo, Redmond, 98052-6399 (US); ISTRIN, Oren, Redmond, 98052-6399 (US); HADAD, Netanel, Redmond, 98052-6399 (US)
(74) Representative: CMS Cameron McKenna Nabarro Olswang LLP

(57) **Abstract**

A tilt angle of a touch instrument is determined based at least in part on an integrated distance sensor in the touch instrument. The integrated distance sensor of the touch instrument is used to determine a straight-line distance along a longitudinal axis of the touch instrument from a tip of the touch instrument to a surface of a computing device. A perpendicular distance is determined from the surface of the computing device to the tip of the touch instrument. The tilt angle of the touch instrument is determined based on the straight-line distance and the perpendicular distance.

## Description

### BACKGROUND

Touch interfaces of computing devices allow users to perform operations such as selecting displayed content, writing, drawing, and shading, through the use of input devices including touch instruments (e.g., styluses, digital pens, etc.). Computing devices and touch instruments can detect the tilt angle of the touch instrument and adjust the input accordingly. For example, when the tip of the touch instrument is touching the computing device, the tilt angle can be used to simulate shading with the side of a pencil or create broader brush strokes in painting apps. When the touch instrument is hovered over the computing device, the tilt angle can be used for other purposes, such as, cursor preview, brush orientation, or dynamic tool behavior before the stylus touches the screen.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Systems, methods, and computer program products are disclosed for determining a tilt angle of a touch instrument. Various sensors are used to determine distances from a tip of the touch instrument to a surface of a computing device. The tilt angle of the touch instrument is determined based on the determined distances.

Further features and advantages of the embodiments, as well as the structure and operation of various embodiments, are described in detail below with reference to the accompanying drawings. It is noted that the claimed subject matter is not limited to the specific embodiments described herein. Such embodiments are presented herein for illustrative purposes only. Additional embodiments will be apparent to persons skilled in the relevant art(s) based on the teachings contained herein.

### BRIEF DESCRIPTION OF THE DRAWINGS/FIGURES

The accompanying drawings, which are incorporated herein and form a part of the specification, illustrate embodiments of the present application and, together with the description, further serve to explain the principles of the embodiments and to enable a person skilled in the pertinent art to make and use the embodiments.
FIG. 1 shows a view of a touch instrument held by a user hand above a computing device, the touch instrument and/or computing device configured to determine a tilt angle of the touch instrument based at least on a straight-line distance measured by a distance sensor integrated in the touch instrument, in accordance with an embodiment.
FIG. 2 shows a touch instrument above a computing device, the touch instrument and/or computing device configured to determine a tilt angle between the touch instrument and computing device surface based at least on a straight-line distance measured by a distance sensor integrated in a touch instrument, in accordance with an embodiment.
FIG. 3 shows a block diagram of an example touch instrument that includes an integrated distance sensor for determining a straight-line distance to a surface of a computing device, in accordance with an embodiment.
FIG. 4 shows a block diagram of an example computing device for determining a tilt angle based on a straight-line distance measured by an integrated distance sensor in a touch instrument, in accordance with an embodiment.
FIG. 5 shows a flowchart of an example process for determining a tilt angle based on a straight-line distance and a perpendicular distance, in accordance with an embodiment.
FIG. 6 depicts a flowchart of an example process for determining a tilt angle based on synchronized straight-line and perpendicular distances, in accordance with an embodiment.
FIG. 7 shows a flowchart of an example process for determining a tilt angle based on an arcsine of a quotient of a perpendicular distance divided by a straight-line distance, in accordance with an embodiment.
FIG. 8 shows a flowchart of an example process for determining a straight-line distance using an integrated distance sensor in a touch instrument, in accordance with an embodiment.
FIG. 9 shows a flowchart of an example process for transmitting a first signal to disable a distance sensor of a touch instrument, in accordance with an embodiment.
FIG. 10 shows a flowchart of an example process for determining a straight-line distance using an integrated distance sensor in a touch instrument, in accordance with an embodiment.
FIG. 11 depicts a flowchart of an example process for enabling a conductive ring and/or disabling a distance sensor based on a first signal, in accordance with an embodiment.
FIG. 12 shows a flowchart of an example process for disabling a conductive ring and/or enabling a distance sensor based on a second signal, in accordance with an embodiment.
FIG. 13 shows a block diagram of an example computer system in which embodiments may be implemented.

The subject matter of the present application will now be described with reference to the accompanying drawings. In the drawings, like reference numbers indicate identical or functionally similar elements. Additionally, the left-most digit(s) of a reference number identifies the drawing in which the reference number first appears.

### DETAILED DESCRIPTION

### I. Introduction

The following detailed description discloses numerous example embodiments. The scope of the present patent application is not limited to the disclosed embodiments, but also encompasses combinations of the disclosed embodiments, as well as modifications to the disclosed embodiments. It is noted that any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

### II. Example Embodiments

Touch interfaces of computing devices allow users to perform operations such as selecting displayed content, writing, drawing, and shading, through the use of input devices including touch instruments (e.g., styluses, digital pens, etc.). The quality of user experience with such touch instruments depends at least in part on the electrostatic communication link between a digitizer of the computing device and emitters (e.g., tip emitter, conductive ring, etc.) of the touch instrument. Furthermore, the accurate capture of user operations depends on accurate position and orientation determinations such as stylus tilt, which, in turn, depends on the digitizer being able to detect useful signals provided by tip emitter and conductive ring of the touch instrument. Signals (e.g., electrostatic signal, electromagnetic signal, etc.) between the digitizer and the emitters (e.g., tip emitter, conductive ring, etc.) of the touch instrument may weaken in noisy environments, such as when the touch instrument is near or beyond the edge of the digitizer, and/or when a hover height (i.e., the distance between touch instrument and touch screen) exceeds a critical distance (e.g., approximately 1 cm, etc.) from the digitizer.

The accuracy and/or precision of a tilt angle of a touch instrument determined using conventional techniques may degrade as the hover height increases. A conventional technique for determining the tilt angle of a touch instrument involves determining the tilt angle based on a first distance from a tip emitter of the touch instrument to a digitizer of the computing device and a second distance from a conductive ring of the touch instrument to the digitizer. At higher hover heights (e.g., greater than 1cm, etc.), a signal (e.g., electrostatic signal, electromagnetic signal, etc.) between the digitizer and a conductive ring of the touch instrument may be weaken, reducing the accuracy and/or precision of the distance between the digitizer of the computing device and the conductive ring of the touch instrument, which, in turn, reduces the accuracy and/or precision of the tilt angle.

The novel technology described herein overcomes these issues in conventional tilt determination techniques by employing a distance sensor integrated in the touch instrument. In embodiments, the tilt angle of the touch instrument while hovering over a computing device is determined, where "hovering" refers to a tip of the touch instrument being positioned by a user near but separated from a surface of the computing device. The tilt angle during hovering is determined using geometric calculations based on distances from the tip of the touch instrument to the surface of the computing device. For instance, the tilt angle during hovering can be determined based on a perpendicular distance from the surface of the computing device to the tip of the touch instrument and a straight-line distance from the tip of the touch instrument to the surface of the computing device. In embodiments, the perpendicular distance and/or the straight-line distance are not necessarily exact distances, as they are determined based on sensor data provided by sensors (e.g., distance sensor, digitizer) of the touch instrument and/or the computing device, and thus hardware limitations (e.g., sensor variations, etc.) and/or environmental limitations (e.g., noise, etc.) may result in distance measurements that are inexact within a predetermined margin of error.

The straight-line distance from the tip of the touch instrument to the surface of the computing device is determined based on a measurement provided by a distance sensor of the touch instrument. Employing an integrated sensor improves the accuracy of tilt angle determinations at higher hover heights, thus overcoming the inaccuracy of conductive rings at higher hover heights. The distance sensor measures a straight-line distance along a longitudinal axis of the touch instrument from the distance sensor to the surface of the computing device. In embodiments, the distance sensor is placed at the tip of the touch instrument, and the distance provided by the distance sensor is equivalent to the straight-line distance from the tip of the touch instrument to the surface of the computing device. In other configurations, the distance sensor is placed at an internal location of the touch instrument that is distinct from the tip of the touch instrument, and the straight-line distance from the tip of the touch instrument to the computing device is determined by subtracting the distance from the distance sensor to the tip of the touch instrument from the distance determined by the distance sensor.

In an embodiment, to improve the power efficiency of the touch instrument, the distance sensor is disabled when the tilt angle of the touch instrument is determined using other techniques. For instance, when the tip of the touch instrument is touching the surface of the computing device, the distance from the tip of the touch instrument to the surface of the computing device can be presumed to be zero and the distance sensor is not needed. Additionally, at lower hover heights (e.g., less than 1 cm, etc.), the hover tilt angle determined through other techniques may have sufficient accuracy and/or precision such that the distance sensor is not needed. In such scenarios, the distance sensor is disabled to reduce power consumption.

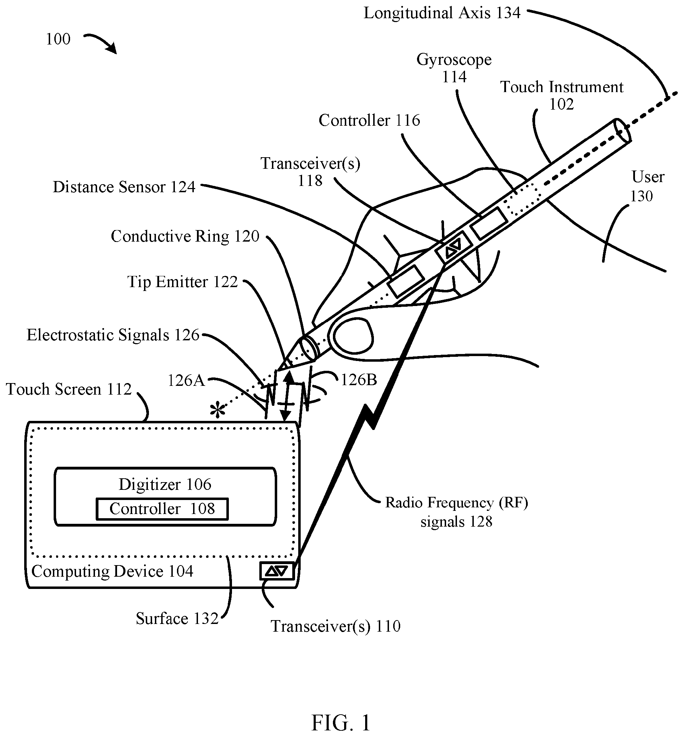

Implementations for these and further embodiments are described in further detail as follows. For example, FIG. 1 shows a block diagram of an example system 100 for determining a tilt angle based at least on a straight-line distance measured by a distance sensor integrated in a touch instrument, in accordance with an embodiment. As shown in FIG. 1, system 100 includes a touch instrument (e.g., stylus, digital pen, etc.) 102 in wireless communications with a computing device 104. Touch instrument 102 includes an optional gyroscope 114, a controller 116, one or more transceivers 118, a conductive ring 120, a tip emitter 122, and a distance sensor 124. Computing device 104 includes a digitizer 106, one or more transceivers 110, and a touch screen 112. System 100 is described in further detail as follows.

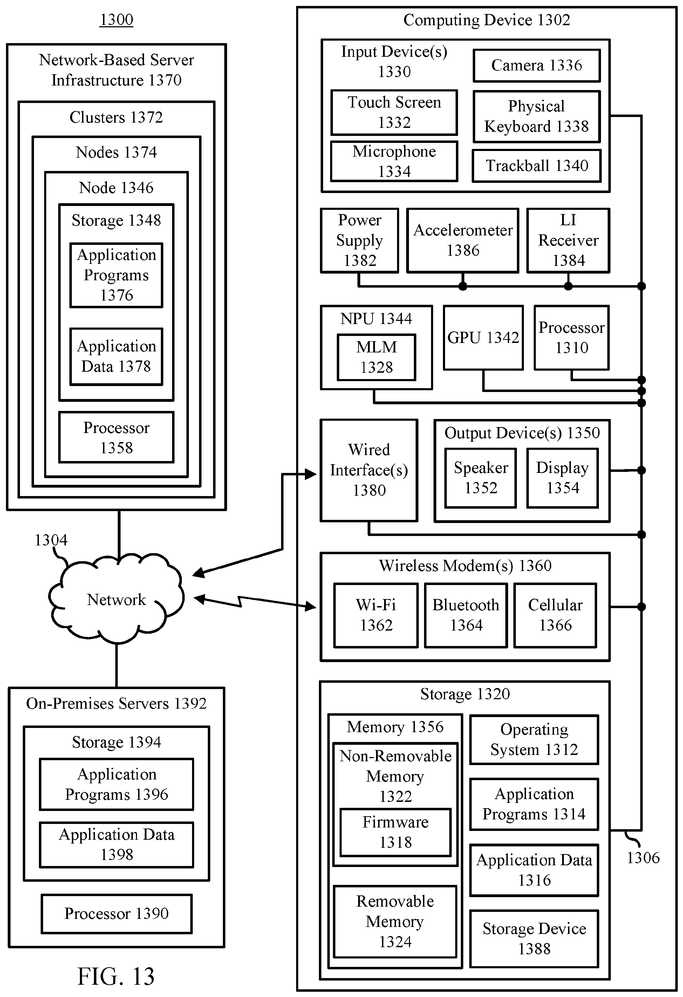

Computing device 104 comprises any type of computing system having an integrated or a peripheral touch interface (e.g., a touch screen, touch pad, etc.) that comprises a digitizer 106 capable of accepting input from a touch instrument (e.g., touch instrument 102). Various example implementations of computing device 104 are described below in reference to FIG. 13 (e.g., computing device 1302, and/or components thereof).

Touch instrument 102 is an input device that allows a user to interact with computing device 104 through a touch interface of computing device 104 (e.g., touch screen 112, digitizer 106, etc.). Examples of touch instrument 102 include a touch pen, a stylus, a light pen, a wearable device for a user's finger (e.g., a glove, etc.). Touch instrument 102 is held and manipulated by a user 130 to interact with computing device 104 to perform functions, such as, selecting objects, writing/inking, shading (e.g., low force inking), erasing, switching an input mode (e.g., selecting a different inking tool, tip, stroke, etc.), and/or the like. For example, when the touch instrument 102 is in contact with the computing device 104, inking operations may be desired by the user, but when the touch instrument 102 hovers above the computing device 104, the user 130 may desire inking operations to cease.

Computing device 104 comprises one or more RF network communication transceivers, such as transceiver(s) 110, for communication with transceiver(s) 118 in touch instrument 102 using radio frequency (RF) signals 128 that operate according to one or more communication protocols (e.g., Bluetooth, near-field communication (NFC), Microsoft pen protocol (MPP), Wi-Fi, etc.). Computing device 104 receives information via transceiver(s) 110, such as, but not limited to, orientation information generated by gyroscope 114 and/or distance information generated by distance sensor 124 of touch instrument 102. Computing device 104 transmits information via transceiver(s) 110, such as orientation information (e.g., stylus tilt), position information (e.g., detected location on digitizer 106), a distance from a surface of computing device 104 to the tip of touch instrument 102 (e.g., distance from detected location on digitizer 106 to tip of touch instrument 102), power management information (e.g., to disable components that are not used in orientation calculations, such as gyroscope 114, conductive ring 120, distance sensor 124, etc.), and/or sensor management information (e.g., to correct gyroscopic drift).

In addition, touch instrument 102 and computing device 104 communicate via electrostatic signals 126 when conductive ring 120 and/or tip emitter 122 are positioned proximate (i.e., within a predetermined distance that enables communication) to digitizer 106. For instance, touch instrument 102 communicates information from gyroscope 114 and/or distance sensor 124 using RF signals 128. Electrostatic signals 126, including tip signal 126A emitted by tip emitter 122 and/or ring signal 126B emitted by conductive ring 120, enable touch instrument 102 and/or computing device 104 to determine the position and/or orientation of touch instrument 102. Conductive ring 120 (e.g., a conical ring antenna/electrode) is a transmitter that encircles the body of touch instrument 102 at a location (e.g., 10 mm, etc.) above/away from the tip of touch instrument 102. Tip emitter 122 (e.g., a tip located antenna/electrode) is a transmitter located at the tip of touch instrument 120. Electrostatic signals 126 emitted by conductive ring 120 and tip emitter 122 provide high precision (e.g., ability to detect sub-millimeter changes in position) at low hover distances (e.g., less than ~1cm). Placement of tip emitter 122 at the tip of touch instrument 102 results in closer proximity of tip emitter 122 to digitizer 106 and a stronger tip signal 126A during typical use of touch instrument 102 resulting in a better user experience. At low hover distances, electrostatic signals 126 can be used to determine the tilt angle based on differences in distances and/or positions determined based on tip signal 126A and ring signal 126B, which provides the advantage of high-precision tilt angle determinations. For instance, as the orientation (e.g., tilt angle) of touch instrument 102 changes, the distance of conductive ring 120 from digitizer 106 also changes, resulting in a difference in the strength and positioning of ring signal 126B relative to digitizer 106 that can be used to accurately determine the tilt angle. Positioning conductive ring 120 and/or tip emitter 122 in touch instrument 102 close to the tip of touch instrument 102, as shown in FIG. 1, reduces their distance from digitizer 106 and thereby enhances their effectiveness in enabling touch and tilt determinations. In embodiments, tip emitter 122 and/or conductive ring 120 are connected to one or more power sources of touch instrument 102, and emit electrostatic signals 126 (e.g., tip signal 126A and/or ring signal 126B, respectively) at the same or at different power levels.

A user can interact with applications of computing device 104 by manipulating touch instrument 102. Computing device 104 is configured to execute software applications that cause information (e.g., content, UI, etc.) to be displayed to users via UIs associated with touch interfaces, such as, touch screen 112. Users interact with the applications and/or displayed information using touch instrument 102. For instance, users can select content, to perform inking operations, switch input modes, interact with UIs and/or the like. The input provided to applications of computing device 104 differ based on the position and/or orientation of touch instrument 102.

In embodiments, digitizer 106 of computing device 104 comprises an antenna array configured to receive/transmit communication signals from/to touch instrument 102. For instance, electrostatic signals 126, including tip signal 126A emitted by tip emitter 122 and/or ring signal 126B emitted by conductive ring 120, cause electrostatic coupling at corresponding discrete and detectable locations of the antenna array of digitizer 106. A location at which electrostatic coupling occurs represent the location on digitizer 106 that is closest to the corresponding emitter of the electrostatic signal (e.g., tip emitter 122, conductive ring 120, etc.). In configurations, digitizer 106 determines a distance perpendicular to the surface of computing device 104 from a locations at which electrostatic coupling occurs and the corresponding emitter of the electrostatic signal based on the strength of the electrostatic signal. A stronger electrostatic signal corresponds to a smaller distance between the emitter (e.g., tip emitter 122, conductive ring 120, etc.) of the electrostatic signal (e.g., tip signal 126A, ring signal 126B, etc.) and the antenna array of digitizer 106, and a weaker electrostatic signal corresponds to a larger distance.

Digitizer 106 includes a controller 108 configured to process electrostatic signals 126 from touch instrument 102 and to act as an interface with a processor (e.g., CPU) in computing device 104. Examples of controller 108 include a microprocessor, a field-programmable gate array (FPGA), an application-specific integrated circuit (ASIC), an analog-to-digital converter (ADC) and the like. Controller 108 receives commands and/or information from touch instrument 102 to determine when and/or where to implement inking operations, to change an input mode (e.g., tool type, tip type, tip size, stroke type, stroke size, etc.), and/or to provide feedback (e.g., to indicate inking to the user via a user interface (UI)). For instance, when touch instrument 102 is in contact with digitizer 106, controller 108 receives inputs to perform inking operations, and when touch instrument 102 is hovering over digitizer 106, controller 108 receives various inputs to change input modes based on positions and/or orientations of touch instrument 102. In an embodiment, inputs are determined based on a gesture (e.g., swipe, flick, stab, slash, etc.) performed using touch instrument 102 and determined based on position and orientation information over a period of time. In some implementations, controller 108 and/or a central processing unit (CPU) in computing device 104 is configured to receive and process signals provided by tip emitter 122, conductive ring 120, orientation information generated by gyroscope 114, and/or distance information provided by distance sensor 124 to determine the position and/or orientation (e.g., tilt angle, etc.) of touch instrument 102 relative to digitizer 106.

In embodiments, noise can interfere with electrostatic signals 126 and affect the determination of the perpendicular distance between digitizer 106 and the emitter of the electrostatic signal. For instance, touch screen 112 may emit display noise that can impact the signal-to-noise ratio (SNR) of electrostatic signals 126. Additionally, environmental noise (e.g., electromagnetic interference from lighting, other electronic devices, and/or natural sources) can also impact the SNR of electrostatic signals 126, especially as the distance between touch instrument 102 and digitizer 106 increases. During typical use of touch instrument 102 (e.g., held at an angle with the tip pointing to computing device 104), conductive ring 120 is farther away than tip emitter 122 from digitizer 106, and noise has a greater effect on the electrostatic signals emitted by conductive ring 120 than those emitted by tip emitter 122.

The manner in which a user holds touch instrument 102 can affect the ability to accurately determine the position and/or orientation of touch instrument 102. As shown in FIG. 1, user 130 may rest a hand on touch instrument 102 while holding touch instrument 102 near the edge (e.g., border, perimeter) of the digitizer 106. The positioning of the fingers of user 130 on touch instrument 102 can lead to a reduction in the detected signal strength (increase in SNR) of electrostatic signals 126 emitted by tip emitter 122 and/or conductive ring 120, which can impact the accuracy and/or precision of the determination of position and/or orientation (e.g., tilt angle) of touch instrument 102. Additionally, when user 130 positions touch instrument 102 such that conductive ring 120 and/or tip emitter 122 are beyond a hover range, the detectable magnitude of electrostatic signals 126 emitted by conductive ring 120 and/or tip sensor 120 decrease, thereby increasing the SNR associated electrostatic signals 126 and decreasing the accuracy and/or precision of the determination of position and/or orientation (e.g., tilt angle) of touch instrument 102. A "hover range" of touch instrument 102 refers to how far touch instrument 102 can hover (e.g., a maximum distance) over computing device 104 before losing synchronization with computing device 104. For example, tip emitter 122 has a hover range of P mm while conductive ring 120 combined with tip emitter 122 can provide a higher hover range of Q mm (e.g., where Q is greater than P). Electrostatic communication between digitizer 106 and touch instrument 102 may be broken when a hover height (e.g., distance between tip emitter 122 and digitizer 106) exceeds a particular distance (e.g., 1 cm).

The position and/or orientation of touch instrument 102 can be determined using alternative methods when noise and/or distance affect the accuracy and/or precision of position and/or orientation determinations generated based on electrostatic signals 126. For instance, when the SNR of electrostatic signals 126 emitted by tip emitter 122 and/or conductive ring 120 are lower than an SNR threshold and/or when the hover distance of tip emitter 122 and/or conductive ring 120 is higher than the hover range, touch instrument 102 and/or computing device 104 can determine the position and/or orientation of touch instrument 102 using information from gyroscope 114 and/or distance sensor 124.

Gyroscope 114 generates orientation information (e.g., tilt angle) that can be used as an alternative, or in conjunction with, orientation determinations made based on electrostatic signals 126 emitted by conductive ring 120 and/or tip emitter 122. Gyroscope 114 is a powered component that may be activated when needed (e.g., when tip emitter 122 and/or conductive ring 120 are outside of the hover range), and deactivated when not needed (e.g., when tip emitter 122 and/or conductive ring 120 are inside the hover range). While gyroscope 114 is useful for determining the orientation of touch instrument 102, gyroscopes are susceptible to gyro drift that affects the accuracy of gyroscope 114, and that requires correction. In an embodiment, gyro drift is be corrected using orientation information determined based on electrostatic signals 126 emitted by conductive ring 120 and/or tip emitter 122. Maintaining the accuracy of orientation measurements generated by gyroscope 114 allows gyroscope 114 to supplement and/or replace orientation information determined based on electrostatic signals 126 when the SNR for electrostatic signals 126 is low.

Distance sensor 124 generates distance information that can be used as an alternative, or in conjunction with, orientation determinations made based on electrostatic signals 126 emitted by conductive ring 120 and/or tip emitter 122. For instance, when conductive ring 120 is outside of its hover range, the orientation of touch instrument 102 is determined based on a perpendicular distance from the surface of digitizer 106 to the tip emitter 122, and a straight-line distance along a longitudinal axis 134 of touch instrument 102 from the tip of touch instrument 102 to the surface of computing device 104. In an embodiment, the tilt angle of touch instrument 102 is determined based on an arcsine of a quotient of the perpendicular distance from the surface of digitizer 106 to the tip emitter 122 divided by the straight-line distance along longitudinal axis 134 of touch instrument 102 from the tip of touch instrument 102 to the surface of computing device 104. Examples of distance sensor 124 include an infrared (IR) distance sensor, a laser-based distance sensor, and an ultrasonic distance sensor. Distance sensor 124 comprises an emitter and a detector, and determines a distance to a surface by emitting, using the emitter, a signal (e.g., sound, IR light, laser, etc.), and measuring, using the detector, at least one of: an intensity (e.g., amount of) the signal that is reflected off the surface and/or a time elapsed between emitting the signal and detecting the signal. In embodiments, distance sensor 124 is a powered component that may be activated when needed (e.g., when conductive ring 120 is outside of the hover range), and deactivated when not needed (e.g., when conductive ring 120 is inside the hover range). In configurations, distance sensor 124 is placed in a standby mode (e.g., not emitting a signal) when not needed, and placed in an active mode (e.g., emitting a signal) when needed. Deactivating and/or disabling components when they are not needed for determining the orientation of the touch instrument provides power efficiency benefits by reducing the power consumed by components when not in use.

Controller 116 is configured to perform and/or support position and orientation determinations. For instance, controller 116 is configured to send and/or receive information via electrostatic signals 126 and/or RF signals 128 to determine the state (e.g., position, orientation, button press, tip pressure, etc.) of touch instrument 102. In embodiments, controller 116 determines an orientation (e.g., tilt angle) of touch instrument 102 based at least in part on information provided by computing device 104. For instance, controller 116 receives distance information determined by computing device 104 based on electrostatic signals 126 emitted by tip emitter 122 and/or conductive ring 120. In an embodiment, controller 116 determines an orientation of touch instrument 102 based on information from gyroscope 114. In embodiments, controller 116 is implemented in hardware, firmware, software, and/or any combination thereof. Examples of controller 108 include a microprocessor, an FPGA, an ASIC, an ADC, and/or software/firmware running thereon.

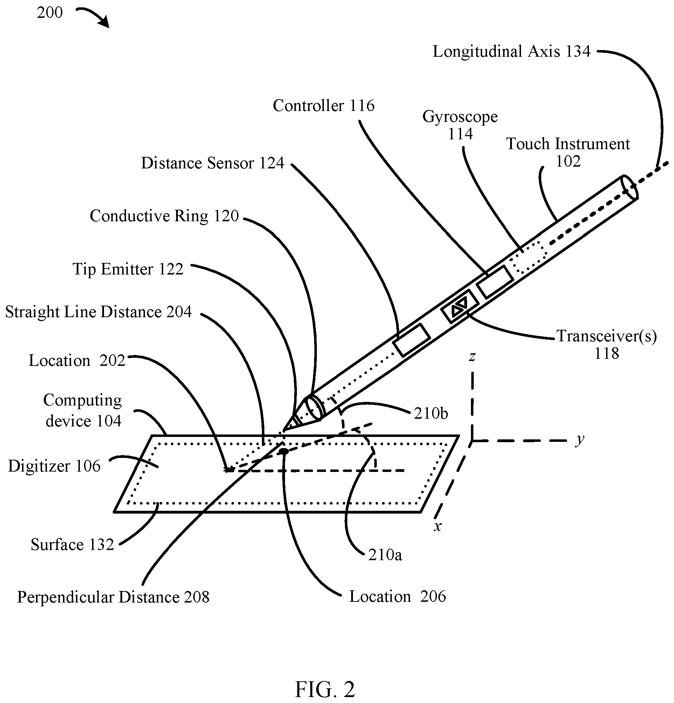

Embodiments described herein may operate in various ways to automatically determine a tilt angle based at least on a straight-line distance measured by a distance sensor integrated in a touch instrument. For instance, FIG. 2 shows a block diagram of an example system 200 for determining a tilt angle based at least on a straight-line distance measured by a distance sensor integrated in a touch instrument, in accordance with an embodiment. As shown in FIG. 2, system 200 comprises touch instrument 102 and computing device 104. Touch instrument 102 includes gyroscope 114, controller 116, transceiver(s) 118, conductive ring 120, tip emitter 122, and distance sensor 124. Computing device 104 includes digitizer 106. System 200 is described in further detail as follows.

As shown in FIG. 2, touch instrument 102 is oriented such that the longitudinal of touch instrument 102 intersects the surface of computing device 104 at location 202, and the tip of touch instrument 102 is hovering over the surface of computing device 104 at location 206. Touch instrument 102 has an orientation with respect to computing device 104, denoted by *x-y-z* axes, where the *x-y* plane corresponds to the surface of computing device 104 and/or digitizer 106, and the *z* axis corresponds to a distance perpendicular from the surface of computing device 104 and/or digitizer 106. As shown in FIG. 2, touch instrument 102 is oriented at a tilt angle 210b (e.g., longitudinal or vertical angle) between the *x-y* plane and longitudinal axis 134 of touch instrument 102, and at an azimuth angle 210a (e.g., horizontal plane angle) between a reference axis (e.g., *y* axis) and a projection of longitudinal axis 134 of touch instrument 102 on the *x-y* plane. In FIG. 2, touch instrument 102 is positioned at a perpendicular distance 208 from location 206 on the surface of computing device 104 to the tip of touch instrument 102, and at a straight line distance 204 along longitudinal axis 134 from the tip of touch instrument 102 to location 202.

In embodiments, the tilt angle 210b of touch instrument 102 is determined based on the straight line distance 204 from the tip of touch instrument 102 to location 202 and the perpendicular distance 208 from the tip of touch instrument 102 to location 206. For instance, tilt angle 210b is determined as an arcsine of a quotient of the perpendicular distance 208 divided by the straight line distance 204. In embodiments, straight line distance 204 is determined based on a distance measured by distance sensor 124, and perpendicular distance 208 is determined based on tip signal 126A emitted by tip emitter 122 and detected by digitizer 106. In configurations, distance sensor 124 is selectively employed to determine tilt angle 210b based on ring signal 126B emitted from conductive ring 120. For instance, when ring signal 126B emitted from conductive ring 120 is below an SNR threshold and/or when conductive ring 120 is outside of its hover range, distance sensor 124 is employed to determine tilt angle 210b.

Straight line distance 204 is determined using distance sensor 124 in various ways. Distance sensor 124 provides a distance along longitudinal axis 134 of touch instrument 102 from distance sensor 124 to location 202. Distance sensor 124 determines a distance to location 202 by emitting a signal (e.g., sound, IR light, laser, etc.), and measuring at least one of: an intensity (e.g., amount of) the signal that is reflected off the surface and/or a time elapsed between emitting the signal and detecting the signal. In a configuration, distance sensor 124 is located at the tip of touch instrument 102, and the distance provided by distance sensor 124 is substantially the same as straight line distance 204. In embodiments, distance sensor 124 is located at an internal location of touch instrument 102 that is distinct from the tip of touch instrument 102, and straight line distance 204 is determined by subtracting the distance from distance sensor 124 to the tip of touch instrument 102 from the distance provided by distance sensor 124. When not in use, distance sensor 124 can be deactivated (e.g., powered off) and/or placed in a standby mode (e.g., not emitting a signal).

Perpendicular distance 208 is determined based on tip signal 126A emitted by tip emitter 122 and detected by digitizer 106. For instance, tip signal 126A emitted by tip emitter 122 are detected by an antenna array of digitizer 106. The position of touch instrument 102 relative to the surface of computing device 104 and/or digitizer 106 is determined based on the strength of electrostatic signals 126 detected by antennae in the antenna array of digitizer 106. The perpendicular distance from the surface of computing device 104 and/or digitizer 106 to conductive ring 120 and/or tip emitter 122 is determined based on the detected energy of electrostatic signals 126 emitted by conductive ring 120 and/or tip emitter 122 and detected by the antenna array of digitizer 106. Tip emitter 122 and conductive ring 120 transmit electrostatic signals 126 at the same time using different frequencies, or at different times using the same frequency. The antenna(s) closest to tip emitter 122 will detect a stronger signal from tip emitter 122, and will correspond to location 206. As the distance from tip emitter 122 to location 206 increases, the magnitude and/or the SNR of tip signal 126A emitted by tip emitter 122 will decrease, and vice versa. In embodiments, computing device 104 and/or digitizer 106 determines perpendicular distance 208 in various ways, including, but not limited to, mapping the signal strength of tip signal 126A emitted by tip emitter 122 to a distance using a lookup table, and/or providing the signal strength of tip signal 126A to a model (e.g., a machine learning model) to statistically determine perpendicular distance 208.

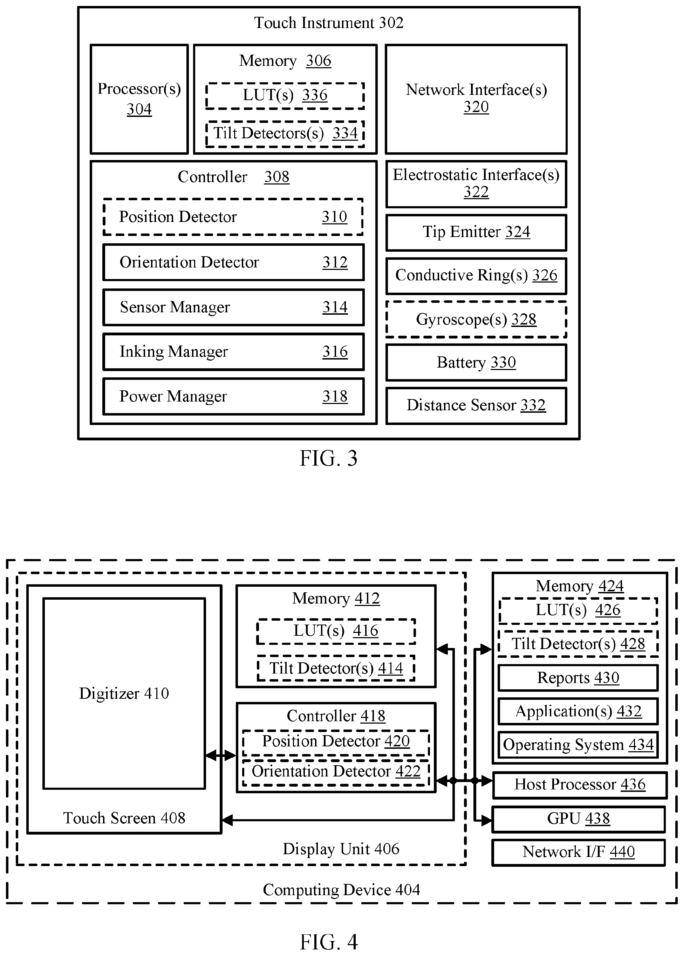

FIG. 3 shows a block diagram of an example touch instrument 302 configured for adaptive determination of stylus tilt, according to an example embodiment. Touch instrument 302 is an embodiment of touch instruments 102 of FIGS. 1 and/or 2. Touch instrument 302 may be any type or style of touch instrument, as mentioned elsewhere herein, or as otherwise known. As shown in FIG. 3, touch instrument 302 includes a processor 304, one or more memories and/or other physical storage device indicated as a memory 306, one or more network interfaces 320, one or more electrostatic interfaces 322, a tip emitter 324, one or more conductive rings 326, one or more gyroscopes 328, a battery 330, a distance sensor 332, and a controller 308. Controller 308 includes a position detector 310, an orientation detector 312, a sensor manager 314, an inking manager 316, and a power manager 318. Memory 306 includes one or more lookup tables (LUT) 336 and one or more tilt detectors 334.

Processor(s) 304 comprise any type of hardware and/or circuitry suitable for performing functions that are ascribed thereto in the following description, as will be appreciated by persons skilled in the relevant art(s), including those mentioned elsewhere herein or otherwise known. Various example implementations of processor(s) 304 are described below in reference to FIG. 13 (e.g., processor 1310, GPU 1342, and/or components thereof).

Memory 306 is configured to store executable computer program instructions/code (e.g., tilt detector(s) 334, LUT(s) 336, etc.) and/or information/data associated with the execution of the executable computer program instructions/code (e.g., gyroscope calibration information, sensor data, etc.). Memory 306 comprises any type of hardware and/or circuitry suitable for performing functions that are ascribed thereto in the following description, as will be appreciated by persons skilled in the relevant art(s), including those mentioned elsewhere herein or otherwise known. Various example implementations of memory 306 are described below in reference to FIG. 13 (e.g., storage 1320, memory 1356, removable memory 1324, and/or components thereof).

Tilt detector(s) 334 include one or more tilt detector algorithms, equations, and/or weights utilized by orientation detector 312 to determine a tilt angle of touch instrument 302 based on electrostatic signals 126 emitted by tip emitter 324 and/or conductive ring(s) 326, distance provided by distance sensor 332, and/or orientation information generated by gyroscope(s) 328.

LUT(s) 336 store relationships between a tilt angle of touch instrument 302 and various characteristics (e.g., distance, electrostatic signal energy, electrostatic signal characteristics, etc.). LUT(s) 336 may be stored, for example, in memory 306, and referenced by processor(s) 304 and/or controller 308 when determining a tilt angle of touch instrument 302. LUT(s) 336 may be dynamically created and/or updated, or may be predetermined.

Network interface(s) 320 comprise any type of personal area network (PAN) transceiver suitable for performing functions that are ascribed thereto in the following description, as will be appreciated by persons skilled in the relevant art(s), including those mentioned elsewhere herein or otherwise known. Examples of network interfaces(s) 320 include a Bluetooth network interface, an NFC network interface, a Wi-Fi network interface, an MPP network interface, and/or the like. In configurations, network interface(s) 320 are embodiments of transceiver(s) 118 of FIGS. 1 and/or 2. Various example implementations of network interfaces (s) 320 are described below in reference to FIG. 13 (e.g., wireless modem(s) 1360, and/or components thereof).

Electrostatic interface(s) 322 are configured to transmit, receive, process, and/or provide to controller 308 communication signals of various types and protocols received from and/or transmitted to antennas of touch instrument 302 (e.g., tip emitter 324, conductive ring(s) 326). In embodiments, electrostatic interface(s) 322 are configured to receive and quantify communication signal energies received at touch instrument 302 and provide such information to controller 308. In configurations, electrostatic interface(s) 322 may overlap, partially or entirely, and/or operate in conjunction with, network interface(s) 320 to coordinate the transmission/reception of signals with a computing device (e.g., computing device 104).

Tip emitter 324 and conductive ring(s) 326 are active (e.g., powered) electrodes that induce electrostatic RF signals to communicate with a digitizer (e.g., digitizer 106) of a computing device (e.g., computing device 104). In configurations, tip emitter 324 and conductive ring(s) 326 are respective embodiments of tip emitter 122 and conductive ring 120 of FIGS. 1 and/or 2. Tip emitter 324 and conductive ring(s) 326 are driven by transceivers of electrostatic interface(s) 322 to emit electrostatic signals 126 through tip emitter 324 and/or conductive ring(s) 326. Conductive ring(s) 326 are coupled to a power source (e.g., battery 330) managed by power manager 318. In configurations, conductive ring(s) 326 are deactivated by power manager 318 to conserve energy when conductive ring(s) 326 are not utilized by orientation detector 312.

Gyroscope(s) 328 are configured to generate orientation information that can be stored in memory 306, utilized by controller 308 to determine a tilt angle of touch instrument 302, and/or provided to computing device 104 to enable computing device 104 to determine a tilt angle of touch instrument 302. In configurations, gyroscope(s) 328 are embodiments of gyroscope 114 of FIGS. 1 and/or 2. Gyroscope(s) 328 can be any type of gyroscope(s) compatible with touch instrument 302, such as, but not limited to, an optical gyroscope and/or a microelectromechanical sensor (MEMS) gyroscope. Gyroscope(s) 328 is be coupled to a power source (e.g., battery 330) and managed by power manager 318. In configurations, gyroscope(s) 328 are deactivated by power manager 318 to conserve energy when gyroscope(s) 328 are not utilized by orientation detector 312. Gyroscope(s) 328 are recalibrated (e.g., on a periodically and/or on an as-needed basis) by sensor manager 314 based on tilt information determined using electrostatic signals 126 provided by tip emitter 324 and conductive ring(s) 326.

Battery 330 is a power source (a charge storage device) for performing functions that are ascribed thereto in the description herein, as will be appreciated by persons skilled in the relevant art(s), including those mentioned elsewhere herein or otherwise known. Various example implementations of battery 330 are described below in reference to FIG. 13 (e.g., power supply 1382, and/or components thereof). Battery 330 and associated circuitry (e.g., voltage regulators) may be managed by power manager 318.

Distance sensor 332 is a sensor configured to determine a distance to an object as set forth in the description herein, and as will be appreciated by persons skilled in the relevant art(s. Examples of distance sensor 332 include an infrared (IR) distance sensor, a laser-based distance sensor, and an ultrasonic distance sensor. In configurations, distance sensor 332 is an embodiment of distance sensor 124 of FIGS. 1 and/or 2. In an embodiment, distance sensor 332 comprises an emitter and a detector, and is configured to determine a distance to a surface by emitting, using the emitter, a signal (e.g., sound, IR light, laser, etc.), and measuring, using the detector, at least one of: an intensity (e.g., amount of) the signal that is reflected off the surface and/or a time elapsed between emitting the signal and detecting the signal.

In embodiments, distance sensor 332 generates distance information that can be used as an alternative, or in conjunction with, orientation determinations made based on electrostatic signals 126 emitted by conductive ring 120 and/or tip emitter 122, and/or orientation information generated by gyroscope(s) 328. For instance, when conductive ring(s) 326 are outside of their hover range, the orientation of touch instrument 302 is determined based on a perpendicular distance from the surface of a digitizer (e.g., digitizer 106) of a computing device (e.g., computing device 104) to the tip emitter 324, and a straight-line distance along longitudinal axis 134 of touch instrument 302 from the tip of touch instrument 302 to the surface of the computing device (e.g., computing device 104). In an embodiment, the tilt angle of touch instrument 302 is determined based on an arcsine of a quotient of the perpendicular distance from the surface of the digitizer to the tip emitter 122 divided by the straight-line distance along longitudinal axis 134 of touch instrument 302 from the tip of touch instrument 302 to the surface of the computing device. In embodiments, distance sensor 332 is coupled to a power source (e.g., battery 330) and managed by power manager 318. In configurations, distance sensor 332 is deactivated by power manager 318 to conserve energy when distance sensor 332 is not utilized by orientation detector 312.

Controller 308 comprises a plurality of components for performing the functions and operations described herein for adaptive tilt determinations for touch instrument 302. Example components of controller 308 include position detector 310, orientation detector 312, sensor manager 314, inking manager 316, and power manager 318. In configurations, gyroscope(s) 328 are embodiments of controller 116 of FIGS. 1 and/or 2. Some components (e.g., force detector) may have been omitted for clarity. In embodiments, controller 308 tracks the position and/or orientation of touch instrument 302 over time (e.g., in a data buffer represented by memory 306) to a change in direction (e.g., increasing or decreasing hover height), a change in location (e.g., nearing or going beyond the border of the digitizer), and/or a change in orientation (e.g., to detect gestures) of touch instrument 302.

Position detector 310 is configured to detect a position of touch instrument 302 in relation to the surface of a digitizer occupying an *x-y* plane, and proximity to the digitizer along an *z* axis that is perpendicular to the surface of the digitizer. Examples of position detector 310 include a force sensor (e.g., to measure contact between a tip of touch instrument 302 and the digitizer), a transceiver (e.g., to detect a signal emitted by an antenna array of the digitizer). In embodiments, position detector 310 determines a proximity to the digitizer based on a measured force (e.g., by a force detector), and/or based on electrostatic (e.g., capacitive) coupling information (e.g., amounts of energy detected by tip emitter 324 and/or conductive ring(s) 326 from electrostatic signals from an antenna array of the digitizer). The determined proximity of touch instrument 302 provides an indication whether contact is being made with the digitizer of the computing device (e.g., touch mode), or whether the touch instrument 302 is hovering over the digitizer of the computing device (e.g., hover mode). In embodiments, a force detector and a distance detector are used concurrently as part of position detector 310 to determine the position and/or proximity of touch instrument 302 to the digitizer of the computing device.

Orientation detector 312 is configured to determine an orientation (e.g., tilt angle) of touch instrument 302 relative the surface of a digitizer (e.g., digitizer 106) of a computing device (e.g., computing device 104). In embodiments, orientation detector 312 determines an orientation (e.g., tilt angle) of touch instrument 302 based on information determined by a component (e.g., tip emitter 324, conductive ring(s) 326, gyroscope(s) 328, distance sensor 332, etc.) and/or information determined by a component (e.g., digitizer 106, controller 108, etc.) of a computing device (e.g., computing device 104). For example, orientation detector 312 determines an orientation (e.g., tilt angle) of touch instrument 302 based on one or more of: orientation information generated by gyroscope(s) 328, based on a perpendicular distance from a surface of the digitizer to tip emitter 324, one or more perpendicular distances from a surface of the digitizer to conductive ring(s) 326, and/or a straight line distance along longitudinal axis 134 of touch instrument 302 from distance sensor 332 to the surface of the digitizer.

In embodiments, orientation detector 312 determines an orientation (e.g., tilt angle) of touch instrument 302 based on a straight line distance, determined by distance sensor 332, along longitudinal axis 134 of touch instrument 302 from distance sensor 332 to the surface of a computing device (e.g., computing device 104), and a perpendicular distance from a surface of the computing device to tip emitter 324. For instance, orientation detector 312 determines a straight line distance along longitudinal axis 134 of touch instrument 302 from a tip of touch instrument 302 to the surface of the computing device by subtracting a distance from distance sensor 332 to the tip of touch instrument 302 from the distance provided by distance sensor 332. At higher hover distances (e.g., greater than ~1cm), the straight line distance determined by a distance sensor (e.g., distance sensor 124 and/or 332) is more accurate than a distance determined based on the signal strength of a detected ring signal (e.g., ring signal 126B) emitted by a conductive ring (e.g., conductive ring 120 and/or 326). Accordingly, determining the tilt angle of the touch instrument based on the straight line distance improves the accuracy of the determined tilt angle at higher hover distances. In a configuration, a digitizer (e.g., digitizer 106) of the computing device transmits electrostatic signals 126 (e.g., tip signal 126A) that are detected by tip emitter 324, and provided to orientation detector 312 to determine the perpendicular distance. In an embodiment, the digitizer detects tip signal 126A emitted by tip emitter 324, determines the perpendicular distance based the detected electrostatic signals, and provides the perpendicular distance to orientation detector 312. Orientation detector 312 determines the orientation (e.g., tilt angle) of touch instrument 302 based on an arcsine of a quotient of the perpendicular distance divided by the straight line distance from the tip of touch instrument 302 to the surface of the computing device.

Sensor manager 314 manages one or more sensors, such as gyroscope(s) 328, which may be prone to drift, requiring recalibration. In embodiments, sensor manager 314 calibrates gyroscope(s) 328 using orientation information (e.g., tilt angle) determined based on electrostatic signals 126 emitted by and/or received by tip emitter 324 and/or conductive ring(s) 326, and/or distance information provided by distance sensor 332.

Inking manager 316 is configured to generate commands to activate and deactivate inking operations at a computing device (e.g., computing device 104). In an example, inking manager 316 generates an activation command or a deactivation command to, respectively, activate or deactivate inking operations based on position and/or orientation of touch instrument 302. In embodiments, inking manager 316 generates different commands for different types of inking operations based on a location of touch instrument 302 relative to the digitizer of the computing device, an orientation (e.g., tilt angle) of the touch instrument 302, a movement (e.g., gesture) of touch instrument 302, and/or the like.

Power manager 318 manages power supplied (e.g., by battery 330) to components of touch instrument 302, such as, but not limited to, gyroscope(s) 328, conductive ring(s) 326, and/or distance sensor 332. Power manager 318 can activate and/or deactivate components to conserve power based on whether the component is needed (e.g., being used) to determine a position and/or orientation of touch instrument 302. For instance, when a component (e.g., tip emitter 324 and/or conductive ring(s) 326) is outside of its hover range, power manager 318 deactivates the component to conserve power. In another example, power manager 318 deactivates distance sensor 332 when the tip of touch instrument 302 is within a predetermined distance (e.g., zero (0) to 1 cm, etc.) from the surface of a computing device. In embodiments, power manager 318 accesses state information of touch instrument 302 to determine whether a component is in use. In a configuration, power manager 318 can deactivate most components of touch instrument 302 (e.g., to place touch instrument 302 in a standby/sleep mode) when a user has not used touch instrument 302 for a period of time (e.g., 1 minute, 5 minutes, etc.).

Various computing devices are applicable to embodiments disclosed herein. For instance, FIG. 4 shows a block diagram of a computing device 404 configured for adaptive determination of stylus tilt, according to an example embodiment. Computing device 404 is an example of computing device 104 of FIGS. 1 and/or 2. As shown in FIG. 4, computing device 404 includes a display unit 406, which may be integrated with, or external to, computing device 404. Display unit 406 includes a touch screen 408, a digitizer 410, a controller 418, and a memory 412. Computing device 404 further includes a memory 424, a host processor 436, a graphics processing unit (GPU) 438, and a network interface (I/F) 440. Computing device 404 is described in further detail as follows.

Memory 412 includes one or more LUTs 416 and one or more tilt detectors 414 for use by controller 418, while memory 424 includes one or more LUTs 426, one or more tilt detectors 428, reports 430, one or more applications 432, and an operating system 434. In embodiments, LUT(s) 416 and 426, and tilt detector(s) 414 and 428 function in a similar manner as LUT(s) 336 and tilt detector(s) 334 of FIG. 3, respectively. Memory 412 and/or memory 424 comprise any type of hardware and/or circuitry suitable for performing functions that are ascribed thereto in the following description, as will be appreciated by persons skilled in the relevant art(s), including those mentioned elsewhere herein or otherwise known. Various example implementations of memory 412 and/or memory 424 are described below in reference to FIG. 13 (e.g., storage 1320, memory 1356, removable memory 1324, and/or components thereof).

Computing device 404 comprises any type of computing system having an integrated or a peripheral touch interface (e.g., a touch screen, touch pad, etc.) that comprises a digitizer 410 capable of accepting input from a touch instrument (e.g., touch instrument 102 and/or 302 of FIGS. 1-3). Various example implementations of computing device 104 are described below in reference to FIG. 13 (e.g., computing device 1302, and/or components thereof).

Computing device 404 communicates with (e.g., integrated or peripheral) display unit 406 to display information (e.g., content, UI, etc.) to a user. In embodiments, computing device 404 displays a user's touch input (e.g., cursor location, etc.) as feedback to the user as they are providing the touch input. Computing device 404 includes host processor 436 configured to execute software application(s) 432 and operating system 434 to cause content to be displayed to users via display unit 406. Computing device 404 is configured to display content generated by remotely executed software applications. In configurations, computing device 404 includes GPU 438, which is configured to render video for output by display unit 406, thereby freeing up host processor 436 to perform other processing. Various example implementations of application(s) 432, operating system 434, host processor 436, and GPU 438 are described below in reference to FIG. 13 (e.g., operating system 1312, computing device 1314, processor 1320, GPU 1342, and/or components thereof).

Display unit 406 includes touch screen 408 that acts as an output device to display graphical information and as input device to accept user input (e.g., via user touch, via a touch instrument, etc.). In configurations, touch screen 408 is an embodiment of touch screen 112 of FIG. 1. Various example implementations of touch screen 408 are described below in reference to FIG. 13 (e.g., computing device 1332, and/or components thereof).

Digitizer 410 converts analog user input into digital signals for processing by controller 418. In configurations, digitizer 410 is an embodiment of digitizer 106 of FIGS. 1 and/or 2. In embodiments, digitizer 410, or a portion thereof, is integrated into touch screen 408 to allow a user to interact information (e.g., content, UI, etc.) displayed by touch screen 408.In embodiments, digitizer 410 is implemented as an antenna array (e.g., a two-dimensional array of antenna elements/electrodes) and/or an array of other sensors. Digitizer 410 detects interactions and/or communications (e.g., commands and/or information) associated with user input operations using a touch instrument (e.g., touch instrument 102 and/or 302). For example, digitizer 410 is configured to receive/transmit communication signals from/to a touch instrument (e.g., touch instrument 102 and/or 302). Antennas (e.g., electrodes) in digitizer 410 detect an amount of energy (e.g., electrostatic coupling and/or transmission energy) emitted by components (e.g., tip emitter 122 and/or 324, conductive ring(s) 120 and/or 326) of the touch instruments (e.g., touch instrument 102 and/or 302). Digitizer 410 can determine, based on the strength of the detected signal, a perpendicular distance from the surface of digitizer 410 to a component (e.g., tip emitter 122 and/or 324, conductive ring(s) 120 and/or 326, etc.) of the touch instrument that emitted the detected signal. Digitizer 410 can detect energy in modulated RF signals that convey information (e.g., haptic parameters), and/or electrostatic signals (e.g., electrostatic signals 126). Digitizer 410 detects touch-related operations in a contact mode (e.g., at a hover height of zero (0), etc.) or in a hover mode (e.g., at a hover height > zero (0)). Digitizer 410 generates signals indicative of user input for processing by controller 418. In embodiments, digitizer 410 also transmits signals (e.g., perpendicular distance, etc.) to the touch instrument to enable the touch instrument to determine an orientation (e.g., tilt angle).

Controller 418 includes a digitizer processor (e.g., a touch controller (TC)) configured to process signals generated by digitizer 410 in response to user interaction with the user input area of touch screen 408. In configurations, controller 418 is an embodiment of controller 108 of FIG. 1. Controller 418 receives and processes signals from digitizer 410 indicative of interactions and/or communications with a touch instrument (e.g., touch instrument 102 and/or 302 of FIGS. 1-3) to determine when and/or where to implement inking operations, erasing operations, and/or provide feedback (e.g., haptic, visual).

In embodiments, controller 418 determine interactions and/or communications with the touch instrument by processing energy detected by digitizer 410. Controller 418 is configured to determine an orientation (e.g., tilt) of a touch instrument (e.g., touch instrument 102 and/or 302) using position detector 420 and orientation detector 422. In instances, position detector 420 and/or orientation detector 422 perform functions similar to position detector 310 and orientation detector 312 of touch instrument 302, respectively. Controller 418 may be configured to determine an orientation (e.g., tilt) of the touch instrument based on determined, detected, measured, and/or received information. For instance, digitizer 410 detects electrostatic signals 126 (e.g., tip signal 126A) emitted by a tip emitter (e.g., tip emitter 122 and/or 324) and/or a conductive ring (e.g., conductive ring(s) 120 and/or 326), and receives information from components of the touch instrument (e.g., gyroscope(s) 114 and/or 328, distance sensor 124 and/or 332, etc.).

Orientation detector 422 is configured to determine an orientation of a touch instrument (e.g., touch instrument 102 and/or 302) based on the detected electrostatic signals, and/or the received information. In embodiments, orientation detector 422 provides the tilt determination to the touch instrument (e.g., to recalibrate a gyroscope). For instance, orientation detector 422 determines an orientation (e.g., tilt angle) of the touch instrument based on a straight line distance, determined by distance sensor (e.g., distance sensor 124 and/or 332), along longitudinal axis 134 of the touch instrument from the distance sensor to the surface of a computing device (e.g., computing device 104), and a perpendicular distance from a surface of the computing device to a tip emitter (e.g., tip emitter 122 and/or 324). For instance, orientation detector 312 determines a straight line distance along longitudinal axis 134 of the touch instrument from a tip of the touch instrument to the surface of the computing device by subtracting a distance from the distance sensor to the tip of the touch instrument from the distance provided by the distance sensor. In a configuration, orientation detector 312 determines a perpendicular distance from the surface of the computing device to the tip emitter based electrostatic signals detected by digitizer 410. Orientation detector 422 determines the orientation (e.g., tilt angle) of the touch instrument based on an arcsine of a quotient of the perpendicular distance divided by the straight line distance from the tip of the touch instrument to the surface of the computing device.

Controller 418 employs position detector 420 to determine the position of a touch instrument (e.g., touch instrument 102 and/or 302) relative to digitizer 410 and/or touch screen 408. In a configuration, orientation detector 312 determines a position of the touch instrument based on the strength of electrostatic signals detected by digitizer 410. For instance, antenna(s) closest to a tip emitter (e.g., tip emitter 122 and/or 324) of the touch instrument will detect a stronger signal from the tip emitter. Position detector 420 analyzes the electrostatic signals detected by digitizer 410 to determine the antenna(s) closest to the tip emitter to determine the position of the tip of the touch instrument relative to the touch screen 408 and/or digitizer 410.

In some embodiments, controller 418 transmits position information to a touch instrument (e.g., touch instrument 102 and/or 302 of FIGS. 1-3) for use by controller 308 related to one or more determinations related to adaptive tilt, power management, or sensor management. For example, controller 418 transmits information to the touch instrument to indicate the touch instrument is too far away from the digitizer and/or beyond the edge of the digitizer to enable the touch instrument to disable one or more components (e.g., tip emitter 122 and/or 324, conductive ring(s) 120 and/or 326, etc.) and/or enable one or more components (e.g., gyroscope(s) 114 and/or 328, distance sensor 124 and/or 332, etc.) of the touch instrument. In a configuration, a first signal can indicate that a tip emitter of the touch instrument is farther from the surface of the digitizer than a first predetermined distance to cause the touch instrument to enable a distance sensor of the touch instrument, and a second signal can indicate that the tip emitter of the touch instrument is closer than a second predetermined distance from the surface of the digitizer to cause the touch instrument to disable the distance sensor. In an embodiment, the first predetermined distance and the second predetermined distance are different distances selected to avoid hysteresis, and avoid repeated enabling and disabling of the distance sensor.

Host processor 436 executes operating system 434 and application(s) 432. Inking data generated by controller 418 is provided to operating system 434 and/or application(s) 432 to enable a user to interact with elements (e.g., content, UI, etc.) of operating system 434 and/or application(s) 432. In embodiments, application(s) 432 respond to inking data indicative of user touch input (e.g., inking operations) by causing GPU 436 to output to display unit 406 a visual representation of the touch input. User input in user input area of digitizer 410 is displayed, for example, by mapping the user input area of digitizer 410 to a corresponding area of a display (e.g., touch screen 408).

In embodiments, digitizer 410 generates reports 430 that includes information detected by digitizer 410 (e.g., touch instrument signal SNR, tip position, etc.) to enable computing device 404 to determine a position, an orientation (e.g., tilt angle), a movement (e.g., gesture), a power management mode, and/or a sensor management mode for a touch instrument (e.g., touch instrument 102 and/or 302 of FIGS. 1-3).

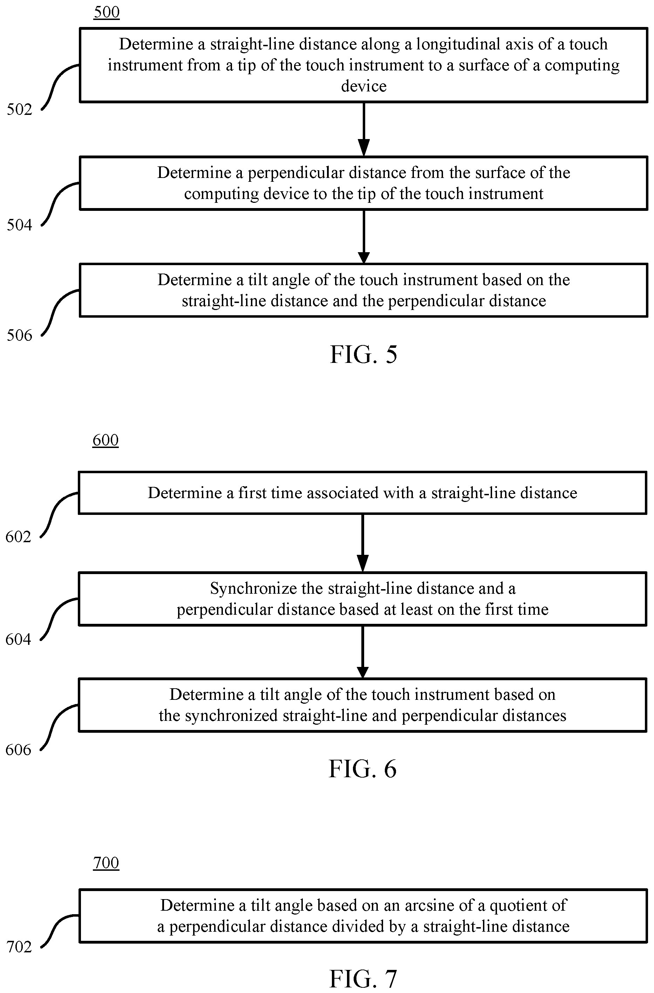

Embodiments described herein may operate in various ways to determine a tilt angle based on a straight-line distance and a perpendicular distance. For instance, FIG. 5 depicts a flowchart 500 of a process for determining a tilt angle based on a straight-line distance and a perpendicular distance, in accordance with an embodiment. In embodiments, touch instrument 102, computing device 104, touch instrument 302, and/or computing device 404 may, for example, operate according to flowchart 500. Flowchart 500 is described as follows with respect to FIGS. 1-4 for illustrative purposes.

Flowchart 500 starts at step 502. In step 502, a straight-line distance along a longitudinal axis of a touch instrument is determined from a tip of the touch instrument to a surface of a computing device. For instance, a distance along longitudinal axis 134 of touch instrument 102 from the tip of touch instrument 102 to location 202 on the surface of computing device 104 is determined based on a distance provided by distance sensor 124. Distance sensor 124 determines a straight line distance 204 along longitudinal axis 134 of touch instrument 102 from distance sensor 124 to location 202 on the surface of computing device 104 by emitting a signal (e.g., light particles, laser, sound waves, etc.) toward the tip of touch instrument 102 and performing a measurement based on the signal. Distance sensor 124 determines straight line distance 204 in various ways, such as, but no limited to, by measuring an amount of the signal that is reflected off the surface of computing device 104, and by measuring a time elapsed between the emitting of the signal and detecting of the reflected signal. In embodiments, digitizer 106, controller 108, controller 116, and/or distance sensor 124 determines the distance along a longitudinal axis of touch instrument 102 from the tip of touch instrument 102 to location 202 on the surface of computing device 104 by subtracting a distance from distance sensor 124 to the tip of touch instrument 102 from straight line distance 204. In an embodiment, distance sensor 124 is located at the tip of the touch instrument 102 and the distance from distance sensor 124 to location 202 is equivalent to the distance from the tip of touch instrument 102 to location 202.

In step 504, a perpendicular distance that is from the surface of the computing device to the tip of the touch instrument is determined. For instance, digitizer 106 and/or controller 108 of computing device 104 determines a distance from the surface of computing device 104 to the tip of touch instrument 102. In embodiments, this distance corresponds to the distance from location 206 on the surface of computing device 104 to the tip of touch instrument 102.

In step 506, a tilt angle of the touch instrument is determined based on the straight-line distance and the perpendicular distance. For instance, digitizer 106, controller 108, controller 116, and/or distance sensor 124 determines a tilt angle of touch instrument 102 based on the straight-line distance along longitudinal axis 134 of touch instrument 102 from the tip of touch instrument 102 to location 202, and the perpendicular distance from location 206 on the surface of computing device 104 to the tip of touch instrument 102. In embodiments, the tilt angle is determined by computing an arcsine of a quotient of the perpendicular distance divided by the straight-line distance.

Embodiments described herein may operate in various ways to determine a tilt angle based on synchronized straight-line and perpendicular distances. For instance, FIG. 6 depicts a flowchart 600 of a process for determining a tilt angle based on synchronized straight-line and perpendicular distances, in accordance with an embodiment. In embodiments, touch instrument 102, computing device 104, touch instrument 302, and/or computing device 404 may, for example, operate according to flowchart 600. Note that not all steps of flowchart 600 may need to be performed in all embodiments, and in some embodiments, the steps of flowchart 600 may be performed in different orders than shown. Flowchart 600 is described as follows with respect to FIGS. 1-4 for illustrative purposes.

Flowchart 600 starts at step 602. In step 602, a time associated with a straight-line distance is determined. For instance, digitizer 106, controller 108, controller 116, and/or distance sensor 124 generates a timestamp indicative of a time of determination of the straight-line distance.

In step 604, the straight-line distance and a perpendicular distance are synchronized based at least on the time. For instance, digitizer 106, controller 108, controller 116, and/or distance sensor 124 associates the straight-line distance determined by distance sensor 124 with a perpendicular distance determined by digitizer 106 and/or controller 108 based on the timestamp indicative of the time of determination of the straight-line distance and a timestamp indicative of a time of determination of the perpendicular distance. In embodiments, digitizer 106, controller 108, controller 116, and/or distance sensor 124 performs synchronization of a straight-line distance and a perpendicular distance by comparing the timestamps associated with the straight-line distance and the perpendicular distance to determine a straight-line distance and a perpendicular distance that are closest in time (e.g., identical timestamp, smallest difference in timestamps, etc.). The straight-line distance and perpendicular distance that are closest in time (e.g., identical timestamp, smallest difference in timestamps, etc.) are considered synchronized and are used to determine the tilt angle of touch instrument 102.

In step 606, a tilt angle of the touch instrument is determined based on the synchronized straight-line and perpendicular distances. For instance, digitizer 106, controller 108, controller 116, and/or distance sensor 124 determines a tilt angle of touch instrument 102 based on a synchronized pair of a straight-line distance determined by distance sensor 124 and a perpendicular distance determined by digitizer 106. The tilt angle is determined by computing an arcsine of a quotient of the perpendicular distance divided by the straight-line distance.

Embodiments described herein may operate in various ways to determine a tilt angle based on an arcsine of a quotient of a perpendicular distance divided by a straight-line distance. For instance, FIG. 7 depicts a flowchart 700 of a process for determining a tilt angle based on an arcsine of a quotient of a perpendicular distance divided by a straight-line distance, in accordance with an embodiment. In embodiments, touch instrument 102, computing device 104, touch instrument 302, and/or computing device 404 may, for example, operate according to flowchart 700. Flowchart 700 is described as follows with respect to FIGS. 1-4 for illustrative purposes.

Flowchart 700 starts at step 702. In step 702, a tilt angle is determined based on an arcsine of a quotient of a perpendicular distance divided by a straight-line distance. For instance, digitizer 106, controller 108, controller 116, and/or distance sensor 124 determines the tilt angle of touch instrument 102 by calculating the angle formed by the intersection of longitudinal axis 134 of touch instrument 102 and the surface of computing device 104. In geometry, this angle can be calculated by determining the arcsine of a quotient of an opposite side divided by a hypotenuse of a right triangle formed by the tip of touch instrument 102, location 202, and location 206. In embodiments, the tilt angle of touch instrument 102 is determined as an arcsine of a quotient of the perpendicular distance from location 206 on the surface of computing device 104 to the tip of touch instrument 102 divided by the straight-line distance along longitudinal axis 134 of touch instrument 102 from the tip of touch instrument 102 to location 202.

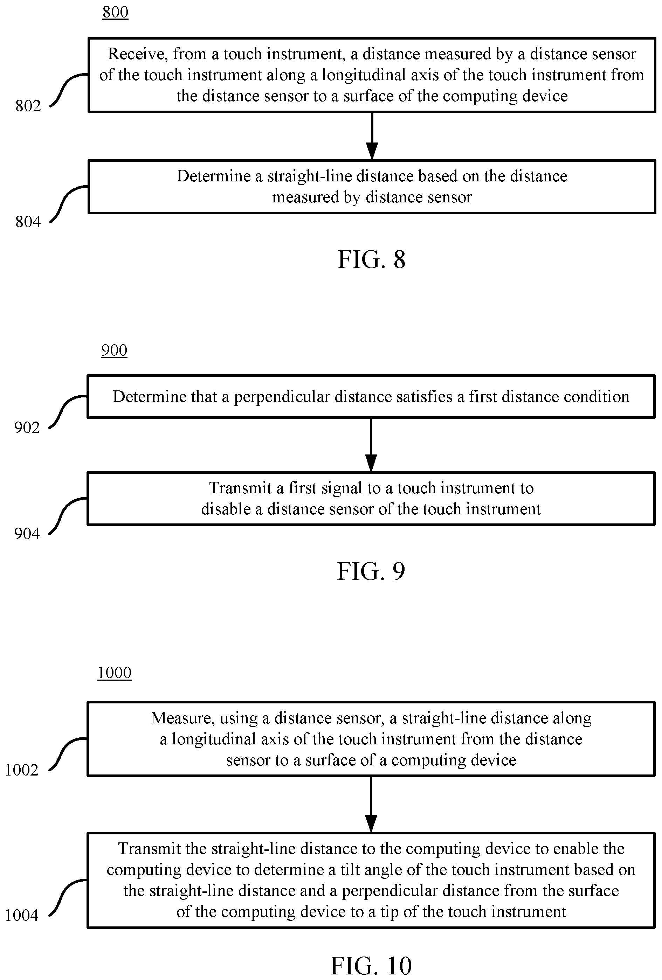

Embodiments described herein may operate in various ways to determine a straight-line distance using an integrated distance sensor in a touch instrument. For instance, FIG. 8 depicts a flowchart 800 of a process for determining a straight-line distance using an integrated distance sensor in a touch instrument, in accordance with an embodiment. In embodiments, computing device 104, and/or computing device 404 may, for example, operate according to flowchart 800. Flowchart 800 is described as follows with respect to FIGS. 1, 2, and 4 for illustrative purposes.

Flowchart 800 starts at step 802. In step 802, a distance is received from a touch instrument, the distance measured by a distance sensor of the touch instrument along a longitudinal axis of the touch instrument from the distance sensor to a surface of the computing device. For instance, digitizer 106, and/or controller 108 receives, from touch instrument 102, a distance determined by distance sensor 124 along longitudinal axis 134 of touch instrument 102 from distance sensor 124 to location 202 the surface of computing device 104.

In step 804, a straight-line distance is determined based on the distance measured by distance sensor. For instance, digitizer 106, and/or controller 108 determines a straight-line distance along longitudinal axis 134 of touch instrument 102 from the tip of touch instrument 102 to location 202 the surface of computing device 104 by subtracting a distance from distance sensor 124 to the tip of touch instrument 102 from the distance received from touch instrument 102.

Embodiments described herein may operate in various ways to transmit a first signal to disable a distance sensor of a touch instrument. For instance, FIG. 9 depicts a flowchart 900 of a process for transmitting a first signal to disable a distance sensor of a touch instrument, in accordance with an embodiment. In embodiments, computing device 104, and/or computing device 404 may, for example, operate according to flowchart 900. Flowchart 900 is described as follows with respect to FIGS. 1, 2, and 4 for illustrative purposes.

Flowchart 900 starts at step 902. In step 902, a perpendicular distance is determined to satisfy a first distance condition. For instance, digitizer 106, and/or controller 108 compares a distance from the tip of touch instrument 102 to location 206 to a first predetermined distance threshold, and determines that a distance from the tip of touch instrument 102 to location 206 on the surface of computing device 104 satisfies a first distance condition (e.g., less than and/or equal to the first predetermined distance threshold, etc.).

In step 904, a first signal is transmitted to a touch instrument to disable a distance sensor of the touch instrument. For instance, digitizer 106, and/or controller 108 transmits a first signal to controller 116 using transceiver(s) 110 to cause controller 116 to disable (e.g., turn off, switch to a standby mode, etc.) distance sensor 124.

Embodiments described herein may operate in various ways to determine a straight-line distance using an integrated distance sensor in a touch instrument. For instance, FIG. 10 depicts a flowchart 1000 of a process for determining a straight-line distance using an integrated distance sensor in a touch instrument, in accordance with an embodiment. In embodiments, touch instrument 102 and/or touch instrument 302 may, for example, operate according to flowchart 1000. Flowchart 1000 is described as follows with respect to FIGS. 1-3 for illustrative purposes.

Flowchart 1000 starts at step 1002. In step 1002, a straight-line distance along a longitudinal axis of the touch instrument is determined using a distance sensor, the straight-line distance measured from the distance sensor to a surface of a computing device. For instance, distance sensor 124 determines a distance from distance sensor 124 to location 202 on the surface of computing device 104, by emitting, using an emitter, a signal (e.g., sound, IR light, laser, etc.), and measuring, using a detector, at least one of: an intensity (e.g., amount of) the signal that is reflected off the surface and/or a time elapsed between emitting the signal and detecting the signal.

In step 1004, the straight-line distance is transmitted to the computing device to enable the computing device to determine a tilt angle of the touch instrument based on the straight-line distance and a perpendicular distance from the surface of the computing device to a tip of the touch instrument. For instance, touch instrument 102 transmits, to digitizer 106, and/or controller 108, the distance determined by distance sensor 124 along longitudinal axis 134 of touch instrument 102 from distance sensor 124 to location 202 the surface of computing device 104.

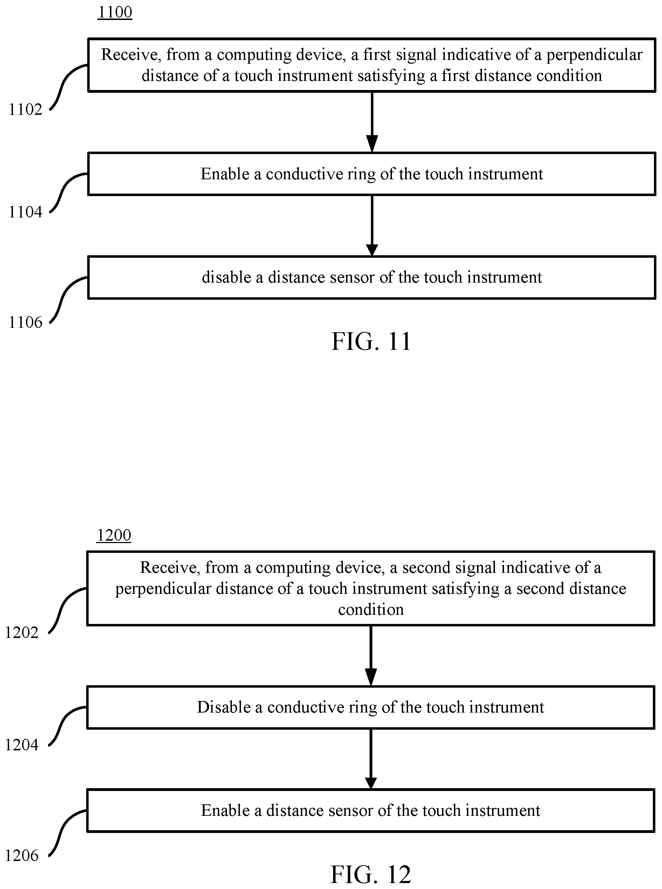

Embodiments described herein may operate in various ways to enable a conductive ring and/or disable a distance sensor based on a first signal. For instance, FIG. 11 depicts a flowchart 1100 of a process for enabling a conductive ring and/or disabling a distance sensor based on a first signal, in accordance with an embodiment. In embodiments, touch instrument 102 and/or touch instrument 302 may, for example, operate according to flowchart 1100. Note that not all steps of flowchart 1100 may need to be performed in all embodiments, and in some embodiments, the steps of flowchart 1100 may be performed in different orders than shown. Flowchart 1100 is described as follows with respect to FIGS. 1-3 for illustrative purposes.

Flowchart 1100 starts at step 1102. In step 1102, a first signal is received from a computing device, the first signal indicative of a perpendicular distance of a touch instrument satisfying a first distance condition. For instance, controller 116 of touch instrument 102 receives, from computing device 104, a first signal indicative of a perpendicular distance from location 206 on the surface of computing device 104 to the tip of touch instrument 102 satisfies a first distance condition (e.g., less than and/or equal to a predetermined distance threshold, etc.).

In step 1104, a conductive ring of the touch instrument is enabled. For instance, controller 116 of touch instrument 102 enables conductive ring 120. In embodiments, conductive ring 120 is enabled by switching conductive ring 120 from a first mode of operation (e.g., off, standby, etc.) to a second mode of operation (e.g., on, active, etc.). In configurations, conductive ring(s) 120 and/or 326 are coupled to a power source managed by power manager 318, and the first signal causes an enable signal to be provided to power manager 318 to cause power manager 318 to enable conductive ring(s) 120 and/or 326 by supplying power to conductive ring(s) 120 and/or 326.

In step 1106, a distance sensor of the touch instrument is disabled. For instance, controller 116 of touch instrument 102 disables distance sensor 124. In embodiments, distance sensor 124 is disabled by switching distance sensor 124 from a first mode of operation (e.g., on, active, etc.) to a second mode of operation (e.g., off, standby, etc.). In configurations, distance sensor 124 and/or 332 are coupled to a power source managed by power manager 318, and the first signal causes a disable signal to be provided to power manager 318 to cause power manager 318 to disable distance sensor 124 and/or 332 by cutting off power to distance sensor 124 and/or 332.

Embodiments described herein may operate in various ways to disable a conductive ring and/or enable a distance sensor based on a second signal. For instance, FIG. 12 depicts a flowchart 1200 of a process for disabling a conductive ring and/or enabling a distance sensor based on a second signal, in accordance with an embodiment. In embodiments, touch instrument 102 and/or touch instrument 302 may, for example, operate according to flowchart 1200. Note that not all steps of flowchart 1200 may need to be performed in all embodiments, and in some embodiments, the steps of flowchart 1200 may be performed in different orders than shown. Flowchart 1200 is described as follows with respect to FIGS. 1-3 for illustrative purposes.

Flowchart 1200 starts at step 1202. In step 1202, a first signal is received from a computing device, the second signal indicative of a perpendicular distance of a touch instrument satisfying a second distance condition. For instance, controller 116 of touch instrument 102 receives, from computing device 104, a second signal indicative of a perpendicular distance from location 206 on the surface of computing device 104 to the tip of touch instrument 102 satisfies a second distance condition (e.g., greater than and/or equal to a predetermined distance threshold, etc.). In embodiments, the first predetermined distance threshold associated with the first distance condition of FIG. 11 is the same as or different from the second predetermined distance threshold associated with the second distance condition of FIG. 12.

In step 1204, a conductive ring of the touch instrument is disabled. For instance, controller 116 of touch instrument 102 disables conductive ring 120. In embodiments, conductive ring 120 is disabled by switching conductive ring 120 from a first mode of operation (e.g., on, active, etc.) to a second mode of operation (e.g., off, standby, etc.). In configurations, conductive ring(s) 120 and/or 326 are coupled to a power source managed by power manager 318, and the first signal causes a disable signal to be provided to power manager 318 to cause power manager 318 to disable conductive ring(s) 120 and/or 326 by cutting of power to conductive ring(s) 120 and/or 326.

In step 1206, a distance sensor of the touch instrument is enabled. For instance, controller 116 of touch instrument 102 enables distance sensor 124. In embodiments, distance sensor 124 is enabled by switching distance sensor 124 from a first mode of operation (e.g., off, standby, etc.) to a second mode of operation (e.g., on, active, etc.). In configurations, distance sensor 124 and/or 332 are coupled to a power source managed by power manager 318, and the first signal causes an enable signal to be provided to power manager 318 to cause power manager 318 to enable distance sensor 124 and/or 332 by supplying power to distance sensor 124 and/or 332.

### III. Example Mobile Device and Computer System Implementation

Touch instrument 102, computing device 104, digitizer 106, controller 108, transceiver(s) 110, touch screen 112, gyroscope 114, controller 116, transceiver(s) 118, conductive ring 120, tip emitter 122, electrostatic signals 126, distance sensor 124, touch instrument 302, processor(s) 304, memory 306, controller 308, position detector 310, orientation detector 312, sensor manager 314, inking manager 316, power manager 318, network interface(s) 320, electrostatic interface(s) 322, tip emitter 324, conductive ring(s) 326, gyroscope(s) 328, battery 330, distance sensor 332, tilt detector(s) 334, LUT(s) 336, computing device 404, display unit 406, touch screen 408, digitizer 410, memory 412, tilt detector(s) 414, LUT(s) 416, controller 418, position detector 420, orientation detector 422, memory 424, LUT(s) 426, tilt detector(s) 428, reports 430, application(s) 432 operating system 434, host processor 436, GPU 438, network interface(s) 440, and/or the components described therein, and/or the steps of flowcharts 500, 600, 700, 800, 900, 1000, 1100, and/or 1200 are implemented in hardware, or hardware combined with one or both of software and/or firmware. For example, controller 108, controller 116, transceiver(s) 118, conductive ring 120, tip emitter 122, controller 308, position detector 310, orientation detector 312, sensor manager 314, inking manager 316, power manager 318, tilt detector(s) 334, LUT(s) 336, tilt detector(s) 414, LUT(s) 416, controller 418, position detector 420, orientation detector 422, LUT(s) 426, tilt detector(s) 428, reports 430, application(s) 432 operating system 434, and/or the components described therein, and/or the steps of flowcharts 500, 600, 700, 800, 900, 1000, 1100, and/or 1200 are each implemented as computer program code/instructions configured to be executed in one or more processors and stored in a computer readable storage medium. Alternatively, Touch instrument 102, computing device 104, digitizer 106, controller 108, transceiver(s) 110, touch screen 112, gyroscope 114, controller 116, transceiver(s) 118, conductive ring 120, tip emitter 122, electrostatic signals 126, distance sensor 124, touch instrument 302, processor(s) 304, memory 306, controller 308, position detector 310, orientation detector 312, sensor manager 314, inking manager 316, power manager 318, network interface(s) 320, electrostatic interface(s) 322, tip emitter 324, conductive ring(s) 326, gyroscope(s) 328, battery 330, distance sensor 332, tilt detector(s) 334, LUT(s) 336, computing device 404, display unit 406, touch screen 408, digitizer 410, memory 412, tilt detector(s) 414, LUT(s) 416, controller 418, position detector 420, orientation detector 422, memory 424, LUT(s) 426, tilt detector(s) 428, reports 430, application(s) 432 operating system 434, host processor 436, GPU 438, network interface(s) 440, and/or the components described therein, and/or the steps of flowcharts 500, 600, 700, 800, 900, 1000, 1100, and/or 1200 are implemented in one or more SoCs (system on chip). An SoC includes an integrated circuit chip that includes one or more of a processor (e.g., a central processing unit (CPU), microcontroller, microprocessor, digital signal processor (DSP), etc.), memory, one or more communication interfaces, and/or further circuits, and optionally executes received program code and/or include embedded firmware to perform functions.

Embodiments disclosed herein can be implemented in one or more computing devices that are mobile (a mobile device) and/or stationary (a stationary device) and include any combination of the features of such mobile and stationary computing devices. Examples of computing devices in which embodiments are implementable are described as follows with respect to FIG. 13. FIG. 13 shows a block diagram of an exemplary computing environment 1300 that includes a computing device 1302. Computing device 1302 is an example of computing device 104 and/or computing device 404, which each include one or more of the components of computing device 1302. In some embodiments, computing device 1302 is communicatively coupled with devices (not shown in FIG. 13) external to computing environment 1300 via network 1304. Network 1304 comprises one or more networks such as local area networks (LANs), wide area networks (WANs), enterprise networks, the Internet, etc. In examples, network 1304 includes one or more wired and/or wireless portions. In some examples, network 1304 additionally or alternatively includes a cellular network for cellular communications. Computing device 1302 is described in detail as follows.

Computing device 1302 can be any of a variety of types of computing devices. Examples of computing device 1302 include a mobile computing device such as a handheld computer (e.g., a personal digital assistant (PDA)), a laptop computer, a tablet computer, a hybrid device, a notebook computer, a netbook, a mobile phone (e.g., a cell phone, a smart phone, etc.), a wearable computing device (e.g., a head-mounted augmented reality and/or virtual reality device including smart glasses), or other type of mobile computing device. In an alternative example, computing device 1302 is a stationary computing device such as a desktop computer, a personal computer (PC), a stationary server device, a minicomputer, a mainframe, a supercomputer, etc.

As shown in FIG. 13, computing device 1302 includes a variety of hardware and software components, including a processor 1310, a storage 1320, a graphics processing unit (GPU) 1342, a neural processing unit (NPU) 1344, one or more input devices 1330, one or more output devices 1350, one or more wireless modems 1360, one or more wired interfaces 1380, a power supply 1382, a location information (LI) receiver 1384, and an accelerometer 1386. Storage 1320 includes memory 1356, which includes non-removable memory 1322 and removable memory 1324, and a storage device 1388. Storage 1320 also stores an operating system 1312, application programs 1314, and application data 1316. Wireless modem(s) 1360 include a Wi-Fi modem 1362, a Bluetooth modem 1364, and a cellular modem 1366. Output device(s) 1350 includes a speaker 1352 and a display 1354. Input device(s) 1330 includes a touch screen 1332, a microphone 1334, a camera 1336, a physical keyboard 1338, and a trackball 1340. Not all components of computing device 1302 shown in FIG. 13 are present in all embodiments, additional components not shown may be present, and in a particular embodiment any combination of the components are present. In examples, components of computing device 1302 are mounted to a circuit card (e.g., a motherboard) of computing device 1302, integrated in a housing of computing device 1302, or otherwise included in computing device 1302. The components of computing device 1302 are described as follows.

In embodiments, a single processor 1310 (e.g., central processing unit (CPU), microcontroller, a microprocessor, signal processor, ASIC (application specific integrated circuit), and/or other physical hardware processor circuit) or multiple processors 1310 are present in computing device 1302 for performing such tasks as program execution, signal coding, data processing, input/output processing, power control, and/or other functions. In examples, processor 1310 is a single-core or multi-core processor, and each processor core is single-threaded or multithreaded (to provide multiple threads of execution concurrently). Processor 1310 is configured to execute program code stored in a computer readable medium, such as program code of operating system 1312 and application programs 1314 stored in storage 1320. The program code is structured to cause processor 1310 to perform operations, including the processes/methods disclosed herein. Operating system 1312 controls the allocation and usage of the components of computing device 1302 and provides support for one or more application programs 1314 (also referred to as "applications" or "apps"). In examples, application programs 1314 include common computing applications (e.g., e-mail applications, calendars, contact managers, web browsers, messaging applications), further computing applications (e.g., word processing applications, mapping applications, media player applications, productivity suite applications), one or more machine learning (ML) models, as well as applications related to the embodiments disclosed elsewhere herein. In examples, processor(s) 1310 includes one or more general processors (e.g., CPUs) configured with or coupled to one or more hardware accelerators, such as one or more NPUs 1344 and/or one or more GPUs 1342.

Any component in computing device 1302 can communicate with any other component according to function, although not all connections are shown for ease of illustration. For instance, as shown in FIG. 13, bus 1306 is a multiple signal line communication medium (e.g., conductive traces in silicon, metal traces along a motherboard, wires, etc.) present to communicatively couple processor 1310 to various other components of computing device 1302, although in other embodiments, an alternative bus, further buses, and/or one or more individual signal lines is/are present to communicatively couple components. Bus 1306 represents one or more of any of several types of bus structures, including a memory bus or memory controller, a peripheral bus, an accelerated graphics port, and a processor or local bus using any of a variety of bus architectures.

Storage 1320 is physical storage that includes one or both of memory 1356 and storage device 1388, which store operating system 1312, application programs 1314, and application data 1316 according to any distribution. Non-removable memory 1322 includes one or more of RAM (random access memory), ROM (read only memory), flash memory, a solid-state drive (SSD), a hard disk drive (e.g., a disk drive for reading from and writing to a hard disk), and/or other physical memory device type. In examples, non-removable memory 1322 includes main memory and is separate from or fabricated in a same integrated circuit as processor 1310. As shown in FIG. 13, non-removable memory 1322 stores firmware 1318 that is present to provide low-level control of hardware. Examples of firmware 1318 include BIOS (Basic Input/Output System, such as on personal computers) and boot firmware (e.g., on smart phones). In examples, removable memory 1324 is inserted into a receptacle of or is otherwise coupled to computing device 1302 and can be removed by a user from computing device 1302. Removable memory 1324 can include any suitable removable memory device type, including an SD (Secure Digital) card, a Subscriber Identity Module (SIM) card, which is well known in GSM (Global System for Mobile Communications) communication systems, and/or other removable physical memory device type. In examples, one or more of storage device 1388 are present that are internal and/or external to a housing of computing device 1302 and are or are not removable. Examples of storage device 1388 include a hard disk drive, an SSD, a thumb drive (e.g., a USB (Universal Serial Bus) flash drive), or other physical storage device.

One or more programs are stored in storage 1320. Such programs include operating system 1312, one or more application programs 1314, and other program modules and program data. Examples of such application programs include computer program logic (e.g., computer program code/instructions) for implementing controller 108, controller 116, transceiver(s) 118, conductive ring 120, tip emitter 122, controller 308, position detector 310, orientation detector 312, sensor manager 314, inking manager 316, power manager 318, tilt detector(s) 334, LUT(s) 336, tilt detector(s) 414, LUT(s) 416, controller 418, position detector 420, orientation detector 422, LUT(s) 426, tilt detector(s) 428, reports 430, application(s) 432 operating system 434, and/or each of the components described therein, as well as any of flowcharts 500, 600, 700, 800, 900, 1000, 1100, 1200, and/or any individual steps thereof.

Storage 1320 also stores data used and/or generated by operating system 1312 and application programs 1314 as application data 1316. Examples of application data 1316 include web pages, text, images, tables, sound files, video data, and other data. In examples, application data 1316 is sent to and/or received from one or more network servers or other devices via one or more wired or wireless networks. Storage 1320 can be used to store further data including a subscriber identifier, such as an International Mobile Subscriber Identity (IMSI), and an equipment identifier, such as an International Mobile Equipment Identifier (IMEI). Such identifiers can be transmitted to a network server to identify users and equipment.

In examples, a user enters commands and information into computing device 1302 through one or more input devices 1330 and receives information from computing device 1302 through one or more output devices 1350. Input device(s) 1330 includes one or more of touch screen 1332, microphone 1334, camera 1336, physical keyboard 1338 and/or trackball 1340 and output device(s) 1350 includes one or more of speaker 1352 and display 1354. Each of input device(s) 1330 and output device(s) 1350 are integral to computing device 1302 (e.g., built into a housing of computing device 1302) or are external to computing device 1302 (e.g., communicatively coupled wired or wirelessly to computing device 1302 via wired interface(s) 1380 and/or wireless modem(s) 1360). Further input devices 1330 (not shown) can include a Natural User Interface (NUI), a pointing device (computer mouse), a joystick, a video game controller, a scanner, a touch pad, a stylus pen, a voice recognition system to receive voice input, a gesture recognition system to receive gesture input, or the like. Other possible output devices (not shown) can include piezoelectric or other haptic output devices. Some devices can serve more than one input/output function. For instance, display 1354 displays information, as well as operating as touch screen 1332 by receiving user commands and/or other information (e.g., by touch, finger gestures, virtual keyboard, etc.) as a user interface. Any number of each type of input device(s) 1330 and output device(s) 1350 are present, including multiple microphones 1334, multiple cameras 1336, multiple speakers 1352, and/or multiple displays 1354.

In embodiments where GPU 1342 is present, GPU 1342 includes hardware (e.g., one or more integrated circuit chips that implement one or more of processing cores, multiprocessors, compute units, etc.) configured to accelerate computer graphics (two-dimensional (2D) and/or three-dimensional (3D)), perform image processing, and/or execute further parallel processing applications (e.g., training of neural networks, etc.). Examples of GPU 1342 perform calculations related to 3D computer graphics, include 2D acceleration and framebuffer capabilities, accelerate memory-intensive work of texture mapping and rendering polygons, accelerate geometric calculations such as the rotation and translation of vertices into different coordinate systems, support programmable shaders that manipulate vertices and textures, perform oversampling and interpolation techniques to reduce aliasing, and/or support very high-precision color spaces.

In examples, NPU 1344 (also referred to as an "artificial intelligence (AI) accelerator" or "deep learning processor (DLP)") is a processor or processing unit configured to accelerate artificial intelligence and machine learning applications, such as execution of machine learning (ML) model (MLM) 1328. In an example, NPU 1344 is configured for a data-driven parallel computing and is highly efficient at processing massive multimedia data such as videos and images and processing data for neural networks. NPU 1344 is configured for efficient handling of AI-related tasks, such as speech recognition, background blurring in video calls, photo or video editing processes like object detection, etc.

In embodiments disclosed herein that implement ML models, NPU 1344 can be utilized to execute such ML models, of which MLM 1328 is an example. For instance, where applicable, MLM 1328 is a generative AI model that generates content that is complex, coherent, and/or original. For instance, a generative AI model can create sophisticated sentences, lists, ranges, tables of data, images, essays, and/or the like. An example of a generative AI model is a language model. A language model is a model that estimates the probability of a token or sequence of tokens occurring in a longer sequence of tokens. In this context, a "token" is an atomic unit that the model is training on and making predictions on. Examples of a token include, but are not limited to, a word, a character (e.g., an alphanumeric character, a blank space, a symbol, etc.), a sub-word (e.g., a root word, a prefix, or a suffix). In other types of models (e.g., image based models) a token may represent another kind of atomic unit (e.g., a subset of an image). Examples of language models applicable to embodiments herein include large language models (LLMs), text-to-image AI image generation systems, text-to-video AI generation systems, etc. A large language model (LLM) is a language model that has a high number of model parameters. In examples, an LLM has millions, billions, trillions, or even greater numbers of model parameters. Model parameters of an LLM are the weights and biases the model learns during training. Some implementations of LLMs are transformer-based LLMs (e.g., the family of generative pre-trained transformer (GPT) models). A transformer is a neural network architecture that relies on self-attention mechanisms to transform a sequence of input embeddings into a sequence of output embeddings (e.g., without relying on convolutions or recurrent neural networks).

In further examples, NPU 1344 is used to train MLM 1328. To train MLM 1328, training data that includes input features (attributes) and their corresponding output labels/target values (e.g., for supervised learning) is collected. A training algorithm is a computational procedure that is used so that MLM 1328 learns from the training data. Parameters/weights are internal settings of MLM 1328 that are adjusted during training by the training algorithm to reduce a difference between predictions by MLM 1328 and actual outcomes (e.g., output labels). In some examples, MLM 1328 is set with initial values for the parameters/weights. A loss function measures a dissimilarity between predictions by MLM 1328 and the target values, and the parameters/weights of MLM 1328 are adjusted to minimize the loss function. The parameters/weights are iteratively adjusted by an optimization technique, such as gradient descent. In this manner, MLM 1328 is generated through training by NPU 1344 to be used to generate inferences based on received input feature sets for particular applications. MLM 1328 is generated as a computer program or other type of algorithm configured to generate an output (e.g., a classification, a prediction/inference) based on received input features, and is stored in the form of a file or other data structure.

In examples, such training of MLM 1328 by NPU 1344 is supervised or unsupervised. According to supervised learning, input objects (e.g., a vector of predictor variables) and a desired output value (e.g., a human-labeled supervisory signal) train MLM 1328. The training data is processed, building a function that maps new data on expected output values. Example algorithms usable by NPU 1344 to perform supervised training of MLM 1328 in particular implementations include support-vector machines, linear regression, logistic regression, Naïve Bayes, linear discriminant analysis, decision trees, K-nearest neighbor algorithm, neural networks, and similarity learning.

In an example of supervised learning where MLM 1328 is an LLM, MLM 1328 can be trained by exposing the LLM to (e.g., large amounts of) text (e.g., predetermined datasets, books, articles, text-based conversations, webpages, transcriptions, forum entries, and/or any other form of text and/or combinations thereof). In examples, training data is provided from a database, from the Internet, from a system, and/or the like. Furthermore, an LLM can be fine-tuned using Reinforcement Learning with Human Feedback (RLHF), where the LLM is provided the same input twice and provides two different outputs and a user ranks which output is preferred. In this context, the user's ranking is utilized to improve the model. Further still, in example embodiments, an LLM is trained to perform in various styles, e.g., as a completion model (a model that is provided a few words or tokens and generates words or tokens to follow the input), as a conversation model (a model that provides an answer or other type of response to a conversation-style prompt), as a combination of a completion and conversation model, or as another type of LLM model.

According to unsupervised learning, MLM 1328 is trained to learn patterns from unlabeled data. For instance, in embodiments where MLM 1328 implements unsupervised learning techniques, MLM 1328 identifies one or more classifications or clusters to which an input belongs. During a training phase of MLM 1328 according to unsupervised learning, MLM 1328 tries to mimic the provided training data and uses the error in its mimicked output to correct itself (i.e., correct weights and biases). In further examples, NPU 1344 perform unsupervised training of MLM 1328 according to one or more alternative techniques, such as Hopfield learning rule, Boltzmann learning rule, Contrastive Divergence, Wake Sleep, Variational Inference, Maximum Likelihood, Maximum A Posteriori, Gibbs Sampling, and backpropagating reconstruction errors or hidden state reparameterizations.

Note that NPU 1344 need not necessarily be present in all ML model embodiments. In embodiments where ML models are present, any one or more of processor 1310, GPU 1342, and/or NPU 1344 can be present to train and/or execute MLM 1328.

One or more wireless modems 1360 can be coupled to antenna(s) (not shown) of computing device 1302 and can support two-way communications between processor 1310 and devices external to computing device 1302 through network 1304, as would be understood to persons skilled in the relevant art(s). Wireless modem 1360 is shown generically and can include a cellular modem 1366 for communicating with one or more cellular networks, such as a GSM network for data and voice communications within a single cellular network, between cellular networks, or between the mobile device and a public switched telephone network (PSTN). In examples, wireless modem 1360 also or alternatively includes other radio-based modem types, such as a Bluetooth modem 1364 (also referred to as a "Bluetooth device") and/or Wi-Fi modem 1362 (also referred to as an "wireless adaptor"). Wi-Fi modem 1362 is configured to communicate with an access point or other remote Wi-Fi-capable device according to one or more of the wireless network protocols based on the IEEE (Institute of Electrical and Electronics Engineers) 802.11 family of standards, commonly used for local area networking of devices and Internet access. Bluetooth modem 1364 is configured to communicate with another Bluetooth-capable device according to the Bluetooth short-range wireless technology standard(s) such as IEEE 802.15.1 and/or managed by the Bluetooth Special Interest Group (SIG).

Computing device 1302 can further include power supply 1382, LI receiver 1384, accelerometer 1386, and/or one or more wired interfaces 1380. Example wired interfaces 1380 include a USB port, IEEE 1394 (FireWire) port, a RS-232 port, an HDMI (High-Definition Multimedia Interface) port (e.g., for connection to an external display), a DisplayPort port (e.g., for connection to an external display), an audio port, and/or an Ethernet port, the purposes and functions of each of which are well known to persons skilled in the relevant art(s). Wired interface(s) 1380 of computing device 1302 provide for wired connections between computing device 1302 and network 1304, or between computing device 1302 and one or more devices/peripherals when such devices/peripherals are external to computing device 1302 (e.g., a pointing device, display 1354, speaker 1352, camera 1336, physical keyboard 1338, etc.). Power supply 1382 is configured to supply power to each of the components of computing device 1302 and receives power from a battery internal to computing device 1302, and/or from a power cord plugged into a power port of computing device 1302 (e.g., a USB port, an A/C power port). LI receiver 1384 is useable for location determination of computing device 1302 and in examples includes a satellite navigation receiver such as a Global Positioning System (GPS) receiver and/or includes other type of location determiner configured to determine location of computing device 1302 based on received information (e.g., using cell tower triangulation, etc.). Accelerometer 1386, when present, is configured to determine an orientation of computing device 1302.

Note that the illustrated components of computing device 1302 are not required or all-inclusive, and fewer or greater numbers of components can be present as would be recognized by one skilled in the art. In examples, computing device 1302 includes one or more of a gyroscope, barometer, proximity sensor, ambient light sensor, digital compass, etc. In an example, processor 1310 and memory 1356 are co-located in a same semiconductor device package, such as being included together in an integrated circuit chip, FPGA, or system-on-chip (SOC), optionally along with further components of computing device 1302.

In embodiments, computing device 1302 is configured to implement any of the above-described features of flowcharts herein. Computer program logic for performing any of the operations, steps, and/or functions described herein is stored in storage 1320 and executed by processor 1310.

In some embodiments, server infrastructure 1370 is present in computing environment 1300 and is communicatively coupled with computing device 1302 via network 1304. Server infrastructure 1370, when present, is a network-accessible server set (e.g., a cloud-based environment or platform). As shown in FIG. 13, server infrastructure 1370 includes clusters 1372. Each of clusters 1372 comprises a group of one or more compute nodes and/or a group of one or more storage nodes. For example, as shown in FIG. 13, cluster 1372 includes nodes 1374. Each of nodes 1374 are accessible via network 1304 (e.g., in a "cloud-based" embodiment) to build, deploy, and manage applications and services. In examples, any of nodes 1374 is a storage node that comprises a plurality of physical storage disks, SSDs, and/or other physical storage devices that are accessible via network 1304 and are configured to store data associated with the applications and services managed by nodes 1374.

Each of nodes 1374, as a compute node, comprises one or more server computers, server systems, and/or computing devices. For instance, a node 1374 in accordance with an embodiment includes one or more of the components of computing device 1302 disclosed herein. Each of nodes 1374 is configured to execute one or more software applications (or "applications") and/or services and/or manage hardware resources (e.g., processors, memory, etc.), which are utilized by users (e.g., customers) of the network-accessible server set. In examples, as shown in FIG. 13, nodes 1374 includes a node 1346 that includes storage 1348 and/or one or more of a processor 1358 (e.g., similar to processor 1310, GPU 1342, and/or NPU 1344 of computing device 1302). Storage 1348 stores application programs 1376 and application data 1378. Processor(s) 1358 operate application programs 1376 which access and/or generate related application data 1378. In an implementation, nodes such as node 1346 of nodes 1374 operate or comprise one or more virtual machines, with each virtual machine emulating a system architecture (e.g., an operating system), in an isolated manner, upon which applications such as application programs 1376 are executed.

In embodiments, one or more of clusters 1372 are located/co-located (e.g., housed in one or more nearby buildings with associated components such as backup power supplies, redundant data communications, environmental controls, etc.) to form a datacenter, or are arranged in other manners. Accordingly, in an embodiment, one or more of clusters 1372 are included in a datacenter in a distributed collection of datacenters. In embodiments, exemplary computing environment 1300 comprises part of a cloud-based platform.

In an embodiment, computing device 1302 accesses application programs 1376 for execution in any manner, such as by a client application and/or a browser at computing device 1302.

In an example, for purposes of network (e.g., cloud) backup and data security, computing device 1302 additionally and/or alternatively synchronizes copies of application programs 1314 and/or application data 1316 to be stored at network-based server infrastructure 1370 as application programs 1376 and/or application data 1378. In examples, operating system 1312 and/or application programs 1314 include a file hosting service client configured to synchronize applications and/or data stored in storage 1320 at network-based server infrastructure 1370.

In some embodiments, on-premises servers 1392 are present in computing environment 1300 and are communicatively coupled with computing device 1302 via network 1304. On-premises servers 1392, when present, are hosted within an organization's infrastructure and, in many cases, physically onsite of a facility of that organization. On-premises servers 1392 are controlled, administered, and maintained by IT (Information Technology) personnel of the organization or an IT partner to the organization. Application data 1398 can be shared by on-premises servers 1392 between computing devices of the organization, including computing device 1302 (when part of an organization) through a local network of the organization, and/or through further networks accessible to the organization (including the Internet). Furthermore, in examples, on-premises servers 1392 serve applications such as application programs 1396 to the computing devices of the organization, including computing device 1302. Accordingly, in examples, on-premises servers 1392 include storage 1394 (which includes one or more physical storage devices such as storage disks and/or SSDs) for storage of application programs 1396 and application data 1398 and include a processor 1390 (e.g., similar to processor 1310, GPU 1342, and/or NPU 1344 of computing device 1302) for execution of application programs 1396. In some embodiments, multiple processors 1390 are present for execution of application programs 1396 and/or for other purposes. In further examples, computing device 1302 is configured to synchronize copies of application programs 1314 and/or application data 1316 for backup storage at on-premises servers 1392 as application programs 1396 and/or application data 1398.

Embodiments described herein may be implemented in one or more of computing device 1302, network-based server infrastructure 1370, and on-premises servers 1392. For example, in some embodiments, computing device 1302 is used to implement systems, clients, or devices, or components/subcomponents thereof, disclosed elsewhere herein. In other embodiments, a combination of computing device 1302, network-based server infrastructure 1370, and/or on-premises servers 1392 is used to implement the systems, clients, or devices, or components/subcomponents thereof, disclosed elsewhere herein.

As used herein, the terms "computer program medium," "computer-readable medium," "computer-readable storage medium," and "computer-readable storage device," etc., are used to refer to physical hardware media. Examples of such physical hardware media include any hard disk, optical disk, SSD, other physical hardware media such as RAMs, ROMs, flash memory, digital video disks, zip disks, MEMs (microelectronic machine) memory, nanotechnology-based storage devices, and further types of physical/tangible hardware storage media of storage 1320. Such computer-readable media and/or storage media are distinguished from and non-overlapping with communication media, propagating signals, and signals per se. Stated differently, "computer program medium," "computer-readable medium," "computer-readable storage medium," and "computer-readable storage device" do not encompass communication media, propagating signals, and signals per se. Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared, and other wireless media, as well as wired media. Embodiments are also directed to such communication media that are separate and non-overlapping with embodiments directed to computer-readable storage media.

As noted above, computer programs and modules (including application programs 1314) are stored in storage 1320. Such computer programs can also be received via wired interface(s) 1360 and/or wireless modem(s) 1360 over network 1304. Such computer programs, when executed or loaded by an application, enable computing device 1302 to implement features of embodiments discussed herein. Accordingly, such computer programs represent controllers of the computing device 1302.

Embodiments are also directed to computer program products comprising computer code or instructions stored on any computer-readable medium or computer-readable storage medium. Such computer program products include the physical storage of storage 1320 as well as further physical storage types.

### IV. Additional Example Embodiments

In embodiments, a touch instrument that comprises: a distance sensor configured to measure a straight-line distance along a longitudinal axis of the touch instrument from the distance sensor to a surface of a computing device; and a transceiver configured to transmit the straight-line distance to the computing device to enable the computing device to determine a tilt angle of the touch instrument based on the straight-line distance and a perpendicular distance from the surface of the computing device to a tip of the touch instrument, the perpendicular distance perpendicular to the surface of the computing device.

In embodiments, the touch instrument further comprises: a tip emitter configured to emit a tip signal to enable the computing device to determine the perpendicular distance from the surface of the computing device to the tip of the touch instrument based on a strength of the tip signal.

In embodiments, the touch instrument further comprises: a conductive ring configured to emit a ring signal to enable the computing device to determine the perpendicular distance from the surface of the computing device to the conductive ring based on the strength of the ring signal.

In embodiments, the touch instrument further comprises: a controller configured to receive, from the computing device, a first signal indicative of the perpendicular distance satisfying a first distance condition; responsive to receiving the first signal, perform at least one of: enable the conductive ring, or disable the distance sensor; receive, from the computing device, a second signal indicative of the perpendicular distance satisfying a second distance condition; and responsive to receiving the second signal, perform at least one of: disable the conductive ring, or enable the distance sensor.

In embodiments, the distance sensor comprises: an emitter to emit signal along the longitudinal axis of the touch instrument; and a detector to detect a reflection of the emitted signal from the surface of the computing device, wherein the straight-line distance is determined based on at least one of: an amount of reflected signal detected by the detector, or a difference between a first time when the emitter emits the signal and a second time when the detector detects the reflected signal.

In embodiments, the distance sensor comprises at least one of: an infrared distance sensor that emits electromagnetic radiation; an ultrasonic distance sensor that emits sound waves; or a laser distance sensor that emits a beam of light.

In embodiments, a method comprises: determining a straight-line distance along a longitudinal axis of a touch instrument from a tip of the touch instrument to a surface of a computing device; determining a perpendicular distance from the surface of the computing device to the tip of the touch instrument; and determining a tilt angle of the touch instrument based on the straight-line distance and the perpendicular distance, the perpendicular distance perpendicular to the surface of the computing device.

In embodiments, determining the tilt angle of the touch instrument comprises: determining an arcsine of a quotient of the perpendicular distance divided by the straight-line distance.

In embodiments, determining the tilt angle of the touch instrument comprises: determining a weighted average of the tilt angle of the touch instrument across a time window.

In embodiments, determining the tilt angle of the touch instrument comprises: determining a first time associated with the straight-line distance; synchronizing the straight-line distance and the perpendicular distance based at least on the first time; and determining the tilt angle of the touch instrument based on the synchronized straight-line and perpendicular distances.

In embodiments, determining the perpendicular distance comprises at least one of: determining a strength of a signal emitted from the tip of the touch instrument; or determining a level of disturbance to an electrostatic field proximate to the surface of the computing device.

In embodiments, determining the straight-line distance along the longitudinal axis of a touch instrument from a tip of the touch instrument to a surface of a computing device comprises: receiving, from the touch instrument, a distance measured by a distance sensor of the touch instrument along the longitudinal axis of the touch instrument from the distance sensor to a surface of the computing device; and determining the straight-line distance based on the distance measured by distance sensor.

In embodiments, the method further comprises: determining that the perpendicular distance satisfies a first distance condition; and transmitting a first signal to the touch instrument to disable a distance sensor of the touch instrument.

In embodiments, a computer-readable storage medium comprises instructions that are executable by a processor to cause the processor to: determine a straight-line distance along a longitudinal axis of a touch instrument from a tip of the touch instrument to a surface of a computing device; determine a perpendicular distance from the surface of the computing device to the tip of the touch instrument; and determine a tilt angle of the touch instrument based on the straight-line distance and the perpendicular distance, the perpendicular distance perpendicular to the surface of the computing device.

In embodiments, to determine the tilt angle of the touch instrument, the instructions are executable by the processor to cause the process to: determine an arcsine of a quotient of the perpendicular distance divided by the straight-line distance.

In embodiments, to determine the tilt angle of the touch instrument, the instructions are executable by the processor to cause the processor to: determine a weighted average of the tilt angle of the touch instrument across a time window.

In embodiments, to determine the tilt angle of the touch instrument, the instructions are executable by the processor to cause the processor to: determine a first time associated with the straight-line distance; synchronize the straight-line distance and the perpendicular distance based at least on the first time; and determine the tilt angle of the touch instrument based on the synchronized straight-line and perpendicular distances.

In embodiments, to determine the perpendicular distance, the instructions are executable by the processor to cause the processor to perform at least one of: determine a strength of a signal emitted from the tip of the touch instrument; or determine a level of disturbance to an electrostatic field proximate to the surface of the computing device.

In embodiments, to determine the straight-line distance along the longitudinal axis of a touch instrument from a tip of the touch instrument to a surface of a computing device, the instructions are executable by the processor to cause the processor to: receive, from the touch instrument, a distance measured by a distance sensor of the touch instrument along the longitudinal axis of the touch instrument from the distance sensor to a surface of the computing device; and determine the straight-line distance based on the distance measured by distance sensor.

In embodiments, the instructions are executable by the processor to further cause the processor to: determine that the perpendicular distance satisfies a first distance condition; and transmit a first signal to the touch instrument to disable a distance sensor of the touch instrument.

Therefore a tilt angle of a touch instrument is determined based at least in part on an integrated distance sensor in the touch instrument. The integrated distance sensor of the touch instrument is used to determine a straight-line distance along a longitudinal axis of the touch instrument from a tip of the touch instrument to a surface of a computing device. A perpendicular distance is determined from the surface of the computing device to the tip of the touch instrument. The tilt angle of the touch instrument is determined based on the straight-line distance and the perpendicular distance.

### V. Conclusion

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

In the discussion, unless otherwise stated, adjectives such as "substantially" and "about" modifying a condition or relationship characteristic of a feature or features of an embodiment of the disclosure, are understood to mean that the condition or characteristic is defined to within tolerances that are acceptable for operation of the embodiment for an application for which it is intended. Furthermore, where "based on" is used to indicate an effect being a result of an indicated cause, it is to be understood that the effect is not required to only result from the indicated cause, but that any number of possible additional causes may also contribute to the effect. Thus, as used herein, the term "based on" should be understood to be equivalent to the term "based at least on."

While various embodiments of the present disclosure have been described above, it should be understood that they have been presented by way of example only, and not limitation. It will be understood by those skilled in the relevant art(s) that various changes in form and details may be made therein without departing from the scope of the invention as defined in the appended claims. Accordingly, the breadth and scope of the present invention should not be limited by any of the above-described exemplary embodiments, but should be defined only in accordance with the following claims and their equivalents.

## Claims

1. A touch instrument (102, 302) comprising:
a distance sensor (124, 332) configured to measure (1002) a straight-line distance (204) along a longitudinal axis (134) of the touch instrument (102, 302) from the distance sensor (124, 332) to a surface (132) of a computing device (104, 404); and
a transceiver (118, 320) configured to transmit (1004) the straight-line distance (204) to the computing device (104, 404) to enable the computing device (104, 404) to determine a tilt angle (210b) of the touch instrument (102, 302) based on the straight-line distance (204) and a perpendicular distance (208) from the surface (132) of the computing device (104, 404) to a tip of the touch instrument (102, 302), the perpendicular distance (208) perpendicular to the surface (204) of the computing device (104, 404).

2. The touch instrument of claim 1, further comprising:
a tip emitter configured to emit a tip signal to enable the computing device to determine the perpendicular distance from the surface of the computing device to the tip of the touch instrument based on a strength of the tip signal.

3. The touch instrument of claim 1 or 2, further comprising:
a conductive ring configured to emit a ring signal to enable the computing device to determine the perpendicular distance from the surface of the computing device to the conductive ring based on the strength of the ring signal.

4. The touch instrument of any preceding claim, further comprising:
a controller configured to
receive, from the computing device, a first signal indicative of the perpendicular distance satisfying a first distance condition;
responsive to receiving the first signal, perform at least one of:
enable the conductive ring, or
disable the distance sensor;
receive, from the computing device, a second signal indicative of the perpendicular distance satisfying a second distance condition; and
responsive to receiving the second signal, perform at least one of:
disable the conductive ring, or
enable the distance sensor.

5. The touch instrument of any preceding claim, wherein the distance sensor comprises:
an emitter to emit signal along the longitudinal axis of the touch instrument; and
a detector to detect a reflection of the emitted signal from the surface of the computing device,
wherein the straight-line distance is determined based on at least one of:
an amount of reflected signal detected by the detector, or
a difference between a first time when the emitter emits the signal and a second time when the detector detects the reflected signal.

6. The touch instrument of any preceding claim, wherein the distance sensor comprises at least one of:
an infrared distance sensor that emits electromagnetic radiation;
an ultrasonic distance sensor that emits sound waves; or
a laser distance sensor that emits a beam of light.

7. A method (500) comprising:
determining (502) a straight-line distance (204) along a longitudinal axis (134) of a touch instrument (102, 302) from a tip of the touch instrument (102, 302) to a surface (132) of a computing device (104, 404);
determining (504) a perpendicular distance (208) from the surface (132) of the computing device (104, 404) to the tip of the touch instrument (102, 302), the perpendicular distance (208) perpendicular to the surface (132) of the computing device (102, 302); and
determining (506) a tilt angle (210b) of the touch instrument (102, 302) based on the straight-line distance (204) and the perpendicular distance (208).

8. The method of claim 7, wherein said determining the tilt angle of the touch instrument comprises:
determining an arcsine of a quotient of the perpendicular distance divided by the straight-line distance.

9. The method of claim 7 or 8, wherein said determining the tilt angle of the touch instrument comprises:
determining a weighted average of the tilt angle of the touch instrument across a time window.

10. The method of any of claims 7 to 9, wherein said determining the tilt angle of the touch instrument comprises:
determining a first time associated with the straight-line distance;
synchronizing the straight-line distance and the perpendicular distance based at least on the first time; and
determining the tilt angle of the touch instrument based on the synchronized straight-line and perpendicular distances.

11. The method of any of claims 7 to 10, wherein said determining the perpendicular distance comprises at least one of:
determining a strength of a signal emitted from the tip of the touch instrument; or
determining a level of disturbance to an electrostatic field proximate to the surface of the computing device.

12. The method of any of claims 7 to 11, wherein said determining the straight-line distance along the longitudinal axis of a touch instrument from a tip of the touch instrument to a surface of a computing device comprises:
receiving, from the touch instrument, a distance measured by a distance sensor of the touch instrument along the longitudinal axis of the touch instrument from the distance sensor to a surface of the computing device; and
determining the straight-line distance based on the distance measured by distance sensor.

13. The method of any of claims 7 to 12, further comprising:
determining that the perpendicular distance satisfies a first distance condition; and
transmitting a first signal to the touch instrument to disable a distance sensor of the touch instrument.

14. A computer-readable storage medium (306, 412, 424, 1320) comprising instructions (334, 414, 428, 1314) that are executable by a processor (436, 438, 1310, 1342) to cause the processor (436, 438, 1310, 1342) to:
determine (502) a straight-line distance (204) along a longitudinal axis (134) of a touch instrument (102, 302) from a tip of the touch instrument (102, 302) to a surface (132) of a computing device (104, 404);
determine (504) a perpendicular distance (208) from the surface (132) of the computing device (104, 404) to the tip of the touch instrument (102, 302), the perpendicular distance (208) perpendicular to the surface (132) of the computing device (102, 302); and
determine (506) a tilt angle (210b) of the touch instrument (102, 302) based on the straight-line distance (204) and the perpendicular distance (208).

15. The computer-readable storage medium of claim 14, wherein, to determine the tilt angle of the touch instrument, the instructions are executable by the processor to cause the process to:
determine an arcsine of a quotient of the perpendicular distance divided by the straight-line distance.
